# EUROPEAN PATENT SPECIFICATION

(11) **EP 3 226 365 B1**
(45) Date of publication and mention of the grant of the patent: **14.10.2020**
(21) Application number: 17162088.3
(22) Date of filing: 21.03.2017
(51) Int. Cl.: H01T 2/02, H01T 4/16

(54) **GAS DISCHARGE TUBES**
GASENTLADUNGSRÖHREN
TUBES À DÉCHARGE GAZEUSE

(30) Priority: 01.04.2016 US 201615089294
(43) Date of publication of application: 04.10.2017
(60) Divisional application: 20190147.7
(73) Proprietor: RIPD IP Development Ltd, 2012 Nicosia (CY)
(72) Inventor: ROZMAN, Robert, 1216 Smlednik (SI)
(74) Representative: Yeadon IP Limited

(56) References cited:
- EP-A1- 0 905 840
- EP-A1- 1 075 064
- EP-A1- 2 573 885
- WO-A1-2010/086286
- CZ-U1- 12 200
- DE-A1-102011 102 864

## Description

### FIELD OF THE INVENTION

The present invention relates to circuit protection devices and, more particularly, to overvoltage protection devices and methods.

### BACKGROUND

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges and resulting down time may be very costly. EP-A-0905840 discloses a gas discharge tube according to the preamble of claim 1 and EP-A-2573885 discloses a known gas discharge 2. tube

### SUMMARY

According to one aspect of the invention there is provided a gas discharge tube as claimed in appended claim 1. In an embodiment, a gas discharge tube includes a housing defining a chamber, first and second terminal electrodes mounted on the housing, a plurality of inner electrodes located in the chamber, and a gas contained in the chamber. The inner electrodes are serially disposed in the chamber in spaced apart relation to define a series of spark gaps from the first terminal electrode to the second terminal electrode. The chamber is hermetically sealed.

In some embodiments, the plurality of electrodes includes at least three inner electrodes defining at least four inner spark gaps.

In some embodiments, the housing includes an insulator and a cover forming the housing and defining the chamber, and the insulator is formed of an electrically insulating material. The cover may be electrically conductive.

According to some embodiments, at least some of the inner electrodes are curved plates.

In some embodiments, the inner electrodes are captured in the chamber to permit limited displacement between the housing and the inner electrodes.

According to the invention, the gas discharge tube further includes a trigger device that is contained in the housing and that is electrically conductively coupled to either one of the first terminal electrode or the second terminal electrode and to ones of the plurality of inner electrodes.

According to the invention, the trigger device is disposed in the chamber.

According to the invention, the trigger device includes: a substrate formed of an electrically insulating material; and a plurality of resistor links mounted on the substrate, wherein the resistor links are configured to conduct current from the inner electrodes.

In some embodiments, the trigger device includes holes defined in the substrate to permit electrical connection between the resistor links and the inner electrodes.

According to some embodiments, each of the resistor links includes a resistor layer bonded to the substrate, the resistor layer being formed of an electrically resistive material. The electrically resistive material may include graphite in an adhesive carrier. In some embodiments, each of the resistor links further includes a terminal interface layer between the resistor layer thereof and the inner electrode associated with the resistor link, and the terminal interface layer is formed of metal.

According to some embodiments, each of the resistor links has a resistance value in the range of from about 3 to 500 ohm.

The trigger device may include integral locator features that secure the inner electrodes in position in the chamber.

The housing may include integral locator features that secure the inner electrodes in position in the chamber.

In some embodiments, the housing includes a partition wall that divides the chamber into fluidly connected first and second subchambers, the first terminal electrode is disposed in the first subchamber, the second terminal electrode is disposed in the second subchamber; and some of the inner electrodes are disposed in the first subchamber and some of the inner electrodes are disposed in the second subchamber.

In some embodiments, the inner electrodes are concentric, cylindrically-shaped plates, and the second terminal includes an annular wall concentric with and circumferentially surrounding the inner electrodes.

In some embodiments, the trigger device includes first and second substrates each formed of an electrically insulating material, at least one resistor link mounted on the first substrate, and at least one resistor link mounted on the second substrate. The resistor links are configured to conduct current from the inner electrodes. In some embodiments, the second substrate is stacked on the first substrate.

In some embodiments, the gas contained in the chamber comprises helium. In some embodiments, the helium gas is present in the chamber in an amount of at least 50% by volume of the total volume of gas in the chamber. In some embodiments, the gas contained in the chamber comprises a mixture of helium and at least one other gas.

According to method embodiments of the invention, a method includes: electrically conductively coupling a first terminal electrode to a phase line of a power system and a second terminal electrode to a neutral line of a power system; providing a plurality of inner electrodes that are arranged between first terminal electrode and the second terminal electrode and that are spaced apart from one another; and electrically conductively coupling a plurality of resistors between respective ones of the plurality of inner electrodes and the second terminal electrode.

In some embodiments, the providing the plurality of inner electrodes comprises arranging the plurality of inner electrodes to define a plurality of spark gaps between the first electrode and a first one of the plurality of the inner electrodes, between ones of the plurality of inner electrodes and between a second one of the plurality of inner electrodes and the second terminal.

According to some embodiments, responsive to a system operating voltage being present on the phase line, no current flows between the first terminal electrode and the second terminal, and responsive to an overvoltage condition being present on the phase line, a current flows from the first terminal electrode to the second terminal electrode. In some embodiments, the current that flows from the first terminal electrode to the second terminal electrode flows across the plurality of spark gaps.

The method may further include providing a housing that defines a chamber, wherein the first terminal electrode and the second terminal electrode are mounted on the housing, wherein the plurality of inner electrodes are located in the chamber, and wherein the plurality of resistors are located in the chamber.

According to embodiments of the technology, an overvoltage protection circuit includes at least one housing defining at least one hermetically sealed chamber, and a series of spaced apart electrodes defining a series of spark gaps therebetween located in the at least one chamber. A gas is contained in the at least one chamber. The gas contained in the at least one chamber includes helium.

It is noted that aspects of the invention described with respect to one embodiment, may be incorporated in a different embodiment although not specifically described relative thereto. That is, all embodiments and/or features of any embodiment can be combined in any way and/or combination. These and other objects and/or aspects of the present invention are explained in detail in the specification set forth below.

### Brief Description of the Drawings

The accompanying figures are included to provide a further understanding of the present invention, and are incorporated in and constitute a part of this specification. The drawings illustrate some embodiments of the present invention and, together with the description, serve to explain principles of the present invention.
**FIG. 1** is a bottom perspective view of a gas discharge tube (GDT) according to some embodiments of the invention.
**FIG. 2** is a top perspective view of the GDT of **FIG. 1****.**
**FIG. 3** is an exploded, top perspective view of the GDT of **FIG. 1****.**
**FIG. 4** is an exploded, bottom perspective view of the GDT of **FIG. 1****.**
**FIG. 5** is a fragmentary top perspective view of the GDT of **FIG. 1****.**
**FIG. 6** is cross-sectional view of the GDT of **FIG. 1** taken along the line **6-6** of **FIG. 2****.**
**FIG. 7** is cross-sectional view of the GDT of **FIG. 1** taken along the line **7-7** of **FIG. 6****.**
**FIG. 8** is a fragmentary top plan view of the GDT of **FIG. 1****.**
**FIG. 9** is a bottom plan view of a trigger device forming a part of the GDT of **FIG. 1****.**
**FIG. 10** is a schematic view of an electrical assembly including the GDT of **FIG. 1****.**
**FIGS. 11A** **and** **11B** are electrical schematic circuits representing two different embodiments corresponding to the GDT of **FIG. 1****.**
**FIG. 12** is a bottom perspective view of a gas discharge tube (GDT) according to further embodiments of the invention.
**FIG. 13** is an exploded, top perspective view of the GDT of **FIG. 12****.**
**FIG. 14** is an exploded, bottom perspective view of the GDT of **FIG. 12****.**
**FIG. 15** is cross-sectional view of the GDT of **FIG. 12** taken along the line **15-15** of **FIG. 12****.**
**FIG. 16** is a fragmentary top perspective view of the GDT of **FIG. 12****.**
**FIG. 17** is a fragmentary top plan view of the GDT of **FIG. 12****.**
**FIG. 18** is a fragmentary top plan view of the GDT of **FIG. 12****.**
**FIG. 19** is a top perspective view of a gas discharge tube (GDT) according to further embodiments of the invention.
**FIG. 20** is an exploded, top perspective view of the GDT of **FIG. 19****.**
**FIG. 21** is a fragmentary top perspective view of the GDT of **FIG. 19****.**
**FIG. 22** is cross-sectional view of the GDT of **FIG. 12** taken along the line **22-22** of **FIG. 19****.**
**FIG. 23** is a fragmentary top plan view of the GDT of **FIG. 19****.**
**FIG. 24** is a bottom perspective view of a trigger device forming a part of the GDT of **FIG. 19****.**
**FIG. 25** is a top perspective view of a gas discharge tube (GDT) according to further embodiments of the invention.
**FIG. 26** is an exploded, top perspective view of the GDT of **FIG. 25****.**
**FIG. 27** is an exploded, top perspective view of the GDT of **FIG. 25****.**
**FIG. 28** is cross-sectional view of the GDT of **FIG. 25** taken along the line **28-28** of **FIG. 25****.**
**FIG. 29** is a bottom perspective view of a trigger device forming a part of the GDT of **FIG. 25****.**
**FIG. 30** is a top perspective view of a gas discharge tube (GDT) according to further embodiments of the invention.
**FIG. 31** is an exploded, bottom perspective view of the GDT of **FIG. 30****.**
**FIG. 32** is an exploded, top perspective view of the GDT of **FIG. 30****.**
**FIG. 33** is cross-sectional view of the GDT of **FIG. 30** taken along the line **33-33** of **FIG. 30****.**
**FIG. 34** is a fragmentary top plan view of the GDT of **FIG. 30****.**
**FIG. 35** is a bottom plan view of a trigger device forming a part of the GDT of **FIG. 30****.**
**FIG. 36** is an enlarged, fragmentary view of the GDT of **FIG. 30** including an alternative trigger device.
**FIG. 37** is an enlarged, fragmentary view of the GDT of **FIG. 30** including a further alternative trigger device.
**FIGS. 38** and **39** are exploded, perspective views of a gas discharge tube (GDT) according to further embodiments of the invention.
**FIGS. 40-43** are perspective views illustrating a method of assembling the GDT of **FIG. 38****.**
**FIG. 44** is a cross-sectional view of the GDT of **FIG. 38** taken along the line **44-44** of **FIG. 38****.**

### Detailed Description of Embodiments of the Invention

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

Well-known functions or constructions may not be described in detail for brevity and/or clarity.

As used herein the expression "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, a "hermetic seal" is a seal that prevents the passage, escape or intrusion of air or other gas through the seal (*i.e.,* airtight). "Hermetically sealed" means that the described void or structure (*e.g*., chamber) is sealed to prevent the passage, escape or intrusion of air or other gas into or out of the void or structure.

As used herein, "monolithic" means an object that is a single, unitary piece formed or composed of a material without joints or seams.

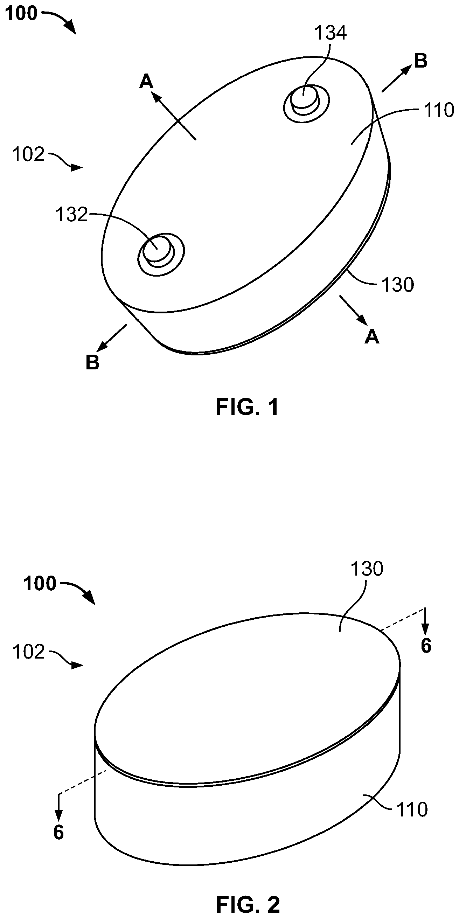

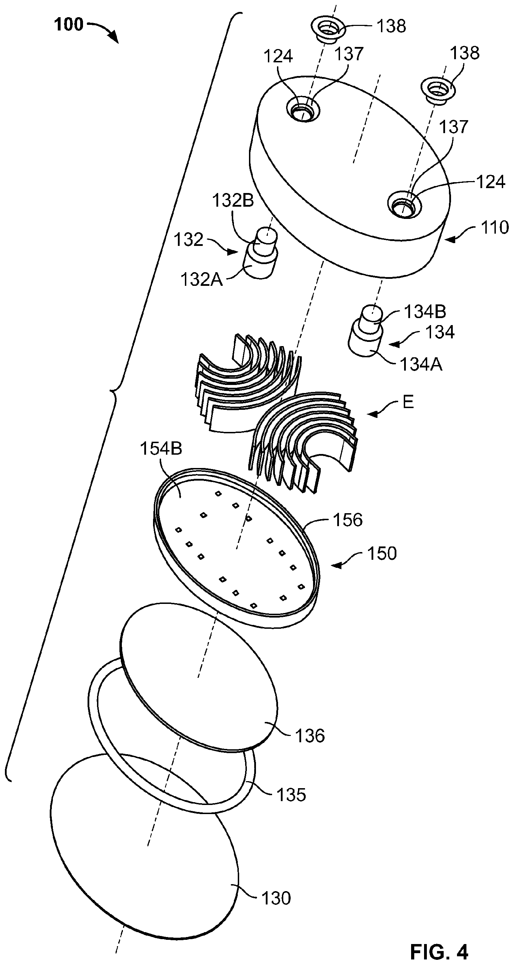

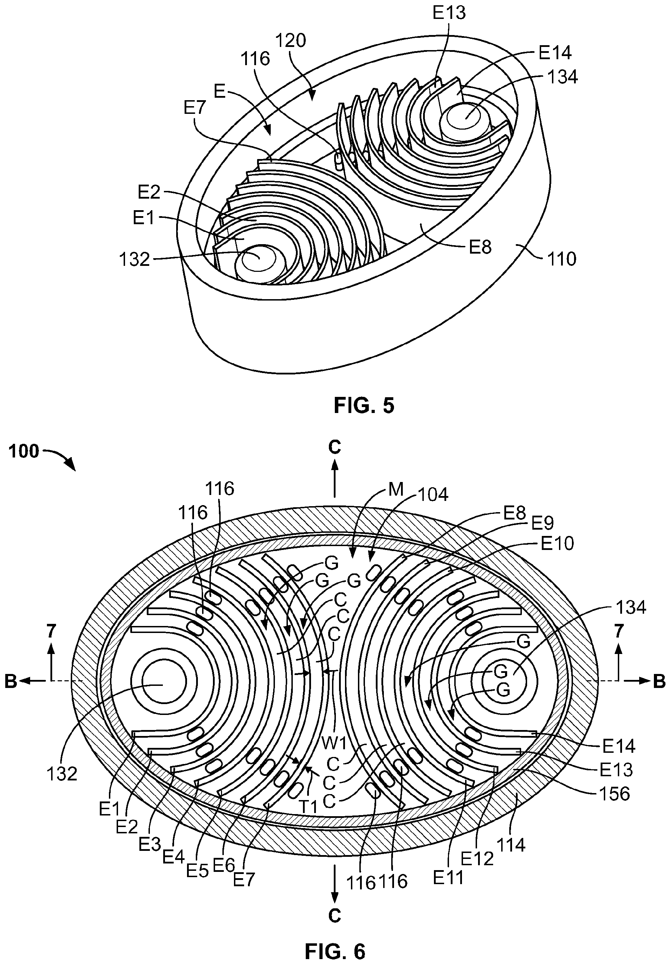

With reference to **FIGS. 1-11****,** a modular, multi-cell gas discharge tube (GDT) **100** according to embodiments of the invention is shown therein. The GDT **100** includes an insulator **110**, a cover **130**, a first terminal electrode **132**, a second terminal electrode **134**, a set **E** of inner electrodes **E1-E14**, an insulator **136**, seals **135**, **138**, bonding layers **137, 139**, a trigger device **150**, and a selected gas **M** (**FIG. 6**).

The insulator **110** and the cover **130** collectively form an enclosure or housing **102** defining an enclosed GDT chamber **104 (****FIG. 6**). The terminal electrodes **132, 134,** the inner electrodes **E1-E14**, the insulator plate **136**, the trigger device **150**, and the gas **M** are contained in the chamber **104.** The housing **102** has a central axis **A-A** (**FIG. 1**), a first lateral axis **B-B**, and a second lateral axis **C-C** (**FIG. 6**). As discussed hereinbelow, the sixteen electrodes **132**, **134**, **E1-E14** define a plurality of gaps **G** (fifteen gaps **G**) and a plurality of cells **C** (fifteen cells **C**) between the electrodes **132, 134, E1-E14 (****FIG. 6**). The electrodes **132, 134 EI-EI4** and the gaps **G** and cells **C** are serially distributed in spaced apart relation along the axis **B-B**.

The insulator **110** may be generally cup-shaped. The insulator **110** includes an end or bottom wall **112** and an annular, elliptical, upstanding side wall **114** collectively defining a cavity **120** and a top opening **122** communicating with the cavity **120.** Electrode through holes or openings **124** extend through the bottom wall **112.** Integral locator features or tabs **116** project upwardly from the bottom wall **112.** The insulator **110,** the cavity **120** and the chamber **104** are elliptically shaped in cross-section perpendicular to the axis **A-A.**

The insulator **110** may be formed of any suitable electrically insulating material. According to some embodiments, the insulator **110** is formed of a material having a melting temperature of at least 1000 degrees Celsius and, in some embodiments, at least 1600 degrees Celsius. In some embodiments, the insulator **110** is formed of a ceramic. In some embodiments, the insulator **110** includes or is formed of alumina ceramic (Al₂0₃) and, in some embodiments, at least about 90% Al₂0₃. In some embodiments, the insulator **110** is monolithic.

The electrodes **132**, **134** each include a head **132A**, **134A** disposed in the cavity **120** and a contact post **132B**, **134B** extending through a respective opening **124** and projecting outwardly from the insulator **110.** A bonding layer **137** is interposed between each post **132B**, **134B** and the inner surface of its opening **124.** The posts **132B**, **134B** are bonded to the insulator **110** by the bonding layers **137** continuously about the full peripheries of the openings **124.** The bonding layers **137** along with the seals **138** hermetically seal the openings **124.** In some embodiments, the bonding layers **137** are metallization, solder or metal-based layers. Suitable metal-based materials for forming the bonding layers **137** may include nickel-plated Ma-Mo metallization. Suitable materials for the seals **138** may include silver-copper alloy.

The electrodes **132**, **134** may be formed of any suitable material. According to some embodiments, the electrodes **132**, **134** are formed of metal and, in some embodiments, are formed of molybdenum or Kovar. According to some embodiments, each of the electrodes **132**, **134** is unitary and, in some embodiments, monolithic.

As discussed above, the inner electrodes **E1-E14** are serially positioned and distributed in the cavity **120** along the axis **B-B**. The electrodes **E1-E14** are positioned such that each electrode **E1-E14** is physically spaced apart from the immediately adjacent other inner electrode(s) **E1-E14**, **132**, **134.** The lower edge of each electrode **E1-E14** is captured in slots defined between associated ones of the locator tabs **116** to thereby limit lateral displacement of the electrode **E1-E14** relative to the housing **102.** Each electrode **E1-E14** is also captured between the bottom wall **112** and the trigger device **150** to thereby limit axial displacement (along axis **A-A**) of the electrode **E1-E14** relative to the housing **102.**

In this manner, each electrode **E1-E14** is positively positioned and retained in position relative to the housing **102** and the other electrodes **E1-E14**, **132, 134.** In some embodiments, the electrodes **E1-E14** are secured in this manner without the use of additional bonding or fasteners applied to the electrodes **E1-E14**. The electrodes **E1-E14** may be semi-fixed or loosely captured between the locator features **116**, the bottom wall **112** and the triggering device **150**. The electrodes **E1-E14** may be capable of floating up and down to a limited degree within the housing **102**.

The electrodes **E1-E14** are each arcuate, bent or curved plates. More particularly, each electrode **E1-E14** has an arcuate, or curvilinear cross-secitonal shape or profile in the plane defined by the lateral axes **B-B** and **C-C**, and is straight, flat or linear in planes parallel to the plane defined by the axes **A-A** and **C-C**. The opposing surfaces of the electrodes **E1-E14** extend substantially parallel to one another. This configuration permits a greater gap length within a housing **102** of a given width and for the electrodes to have similar lengths.

The electrodes **E1-E14** may be formed of any suitable material. According to some embodiments, the electrodes **E1-E14** are formed of metal and, in some embodiments, are formed of molybdenum, copper, tungsten or steel. According to some embodiments, each of the electrodes **E1-E14** is unitary and, in some embodiments, monolithic.

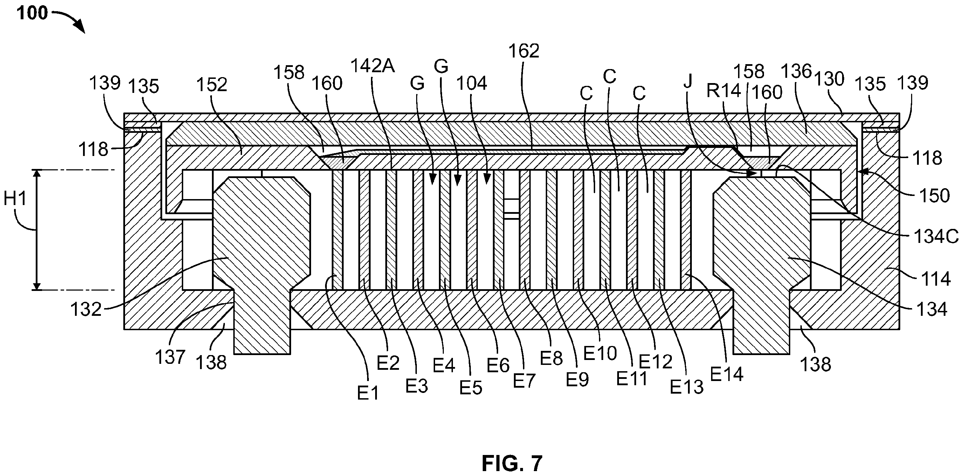

According to some embodiments, each of the electrodes **E1-E14** has a thickness **T1** (**FIG. 6**) in the range of from about 0.3 to 2 mm and, in some embodiments, in the range of from about 0.5 to 1 mm. According to some embodiments, each electrode **E1-E14** has a height **H1 (****FIG. 7****)** in the range of from about 1 to 20 mm and, in some embodiments, in the range of from 3 to 10 mm. According to some embodiments, the length of each electrode **E1-E14** is in the range of from about 10 to 50 mm.

The insulator **136** may be shaped as a flat plate or otherwise configured. The insulator **136** may be formed of any suitable electrically insulating material. According to some embodiments, the insulator **136** is formed of a material having a melting point of at least 1000 degrees Celsius and, in some embodiments, at least 1600 degrees Celsius. In some embodiments, the insulator **136** is formed of a ceramic. In some embodiments, the insulator **136** includes or is formed of alumina ceramic (Al₂0₃) and, in some embodiments, at least about 90% Al₂0₃. In some embodiments, the insulator **136** is monolithic.

The cover plate **130** may be shaped as a flat plate or otherwise configured. The cover plate **130** may be formed of any suitable material. According to some embodiments, the cover plate **130** is formed of metal and, in some embodiments, is formed of copper or Kovar. According to some embodiments, the cover plate **130** is unitary and, in some embodiments, monolithic.

An annular bonding layer **139** is interposed between an annular top edge surface **118** of the insulator **110** and the lower surface of the cover **130.** The seal **135** is interposed between the bonding layer **139** and the cover **130.** The cover **130** is bonded to the surface **118** by the bonding layer **139.** According to some embodiments, the cover **130** is bonded to the surface **118** by the bonding layer **139** continuously about the full periphery of the opening **122** so that the opening **122** is hermetically sealed by the cover **130** and the bonding layer **139** and the seal **135.** The bonding layer **139** may be formed of the same material as described above for the bonding layer **137.** The seal layer **135** may be formed of the same material as described above for the seals **138.**

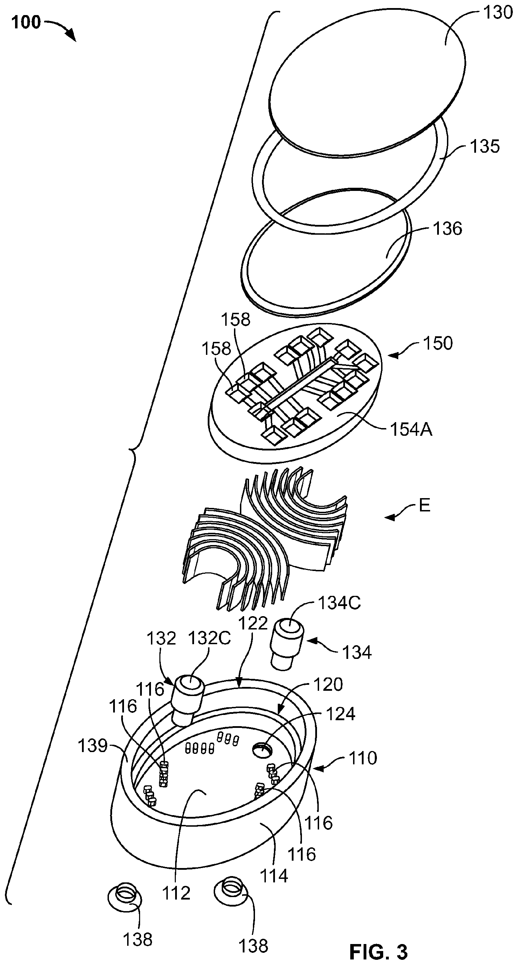

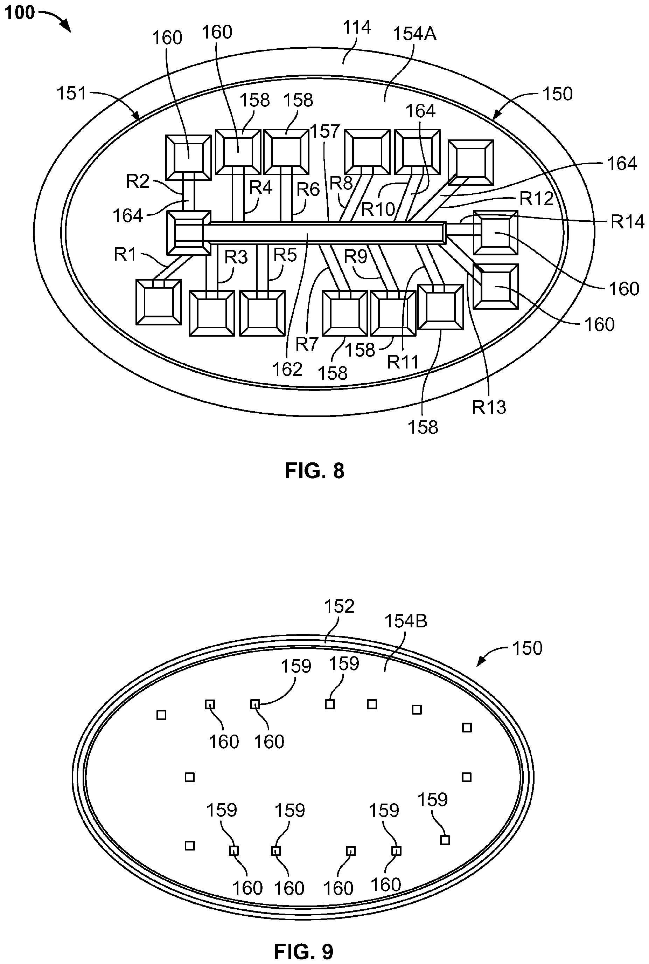

The trigger device **150 (****FIGS. 3****,** **4** and **7****-9**) includes a substrate **152**, a plurality of resistor links **R1-R14** (**FIG. 8**), and a conductor link **162.** The resistor links **R1-R14** and the conductor link **162** constitute a trigger circuit **151.**

The substrate **152** includes a body **154** and an integral annular flange **156.** Recesses **158** are defined in the top side **154A** of the body **154** and communicate with through holes **159** that extend to the bottom side **154B** of the body **154.** A channel **157** is also defined in the top side **154A.**

The substrate **152** may be formed of any suitable electrically insulating material. According to some embodiments, the substrate **152** is formed of a material having a melting temperature of at least 1000 degrees Celsius and, in some embodiments, at least 1600 degrees Celsius. In some embodiments, the substrate **152** is formed of a ceramic. In some embodiments, the substrate **152** includes or is formed of alumina ceramic (Al₂0₃) and, in some embodiments, at least about 90% Al₂0₃. In some embodiments, the substrate **152** is monolithic.

With reference to **FIGS. 7-9****,** the connecting layer **162** is bonded to the top surface of the substrate **152** in the channel **157.** Each resistor link **R1-R14** includes a resistor layer **164** and a terminal interface layer **160.** Each resistor link **R1-R14** is terminated on one end by the connecting layer **162** and by its terminal interface layer **160** on its opposing end. The terminal interface layers **160** are thereby electrically connected to the connecting layer through the resistor layers **164.** The terminal interface layers **160** are bonded to the top surface of the substrate **152** in respective ones of the recesses **158.** The terminal interface layers **160** extend to and may extend into the through holes **159.**

The connecting layer **162** may be formed of any suitable material. According to some embodiments, the connecting layer **162** is formed of metal and, in some embodiments, is formed of metal in an adhesive carrier. In some embodiments, the carrier is a silicate-based adhesive carrier such as a sodium silicate or potassium silicate adhesive. According to some embodiments, the connecting layer **162** has a thickness in the range of from about 50 to 1000 micrometers.

The terminal interface layers **160** may be formed of any suitable material. According to some embodiments, the terminal interface layers **160** are formed of metal and, in some embodiments, are formed of metal in an adhesive carrier. In some embodiments, the carrier is a silicate-based adhesive carrier such as a sodium silicate or potassium silicate adhesive. According to some embodiments, each of the terminal interface layers **160** has a thickness in the range of from about 50 to 1000 micrometers.

The resistor layers **164** may be formed of any suitable electrically resistive material. According to some embodiments, the resistor layers **164** are formed of graphite-based compound. According to some embodiments, the resistor layers **164** are formed of a compound including graphite in an adhesive carrier. In some embodiments, the carrier is a silicate-based adhesive carrier such as a sodium silicate or potassium silicate adhesive.

According to some embodiments, the resistor layers **164** are formed of a material having a specific electrical resistance in the range of from about 1 micro-ohm-meter to 1 ohm-meter.

According to some embodiments, each of the resistor links **R1-R14** has an electrical resistance in the range of from about 3 to 500 ohms.

According to some embodiments, each of the resistor layers **164** has a thickness in the range of from about 1 to 150 micrometers.

The gas **M** may be any suitable gas, and may be a single gas or a mixture of two or more *(e.g.,* 2, 3, 4, 5, or more) gases. According to some embodiments, the gas **M** includes at least one inert gas. In some embodiments, the gas **M** includes at least one gas selected from argon, neon, helium, hydrogen, and/or nitrogen. According to some embodiments, the gas **M** is or includes helium. In some embodiments, the gas **M** may be air and/or a mixture of gases present in air.

According to some embodiments, the gas **M** may comprise a single gas in any suitable amount, such as, for example, in any suitable amount in a mixture with at least one other gas. In some embodiments, the gas **M** may comprise a single gas in an amount of about 0.1%, 0.5%, 1%, 5%, 10%, 15%, 20%, 25%, 30%, 35%, 40%, 45%, 50%, 55%, 60%, 65%, 70%, 75%, 80%, 85%, 90%, 95%, 98%, or 99% by volume of the total volume of gas present in the GDT chamber **104**, or any range therein. In some embodiments, the gas **M** may comprise a single gas in an amount of less than 50% *(e.g.,* less than 40%, 30%, 20%, 10%, 5%, or 1%) by volume of the total volume of gas present in the GDT chamber **104.** In some embodiments, the gas **M** may comprise a single gas in an amount of more than 50% *(e.g.,* more than 60%, 70%, 80%, 90%, or 95%) by volume of the total volume of gas present in the GDT chamber **104.** In some embodiments, the gas **M** may comprise a single gas in an amount in a range of about 0.5% to about 15%, about 1% to about 50%, or about 50% to about 99% by volume of the total volume of gas present in the GDT chamber **104.** In some embodiments, the gas **M** comprises at least one gas present in an amount of at least 50% by volume of the total volume of gas present in the GDT chamber **104.** According to some embodiments, the gas **M** comprises helium in an amount of at least 50% by volume of the total volume of gas present in the GDT chamber **104.** According to some embodiments, the gas **M** comprises at least one gas present in an amount of about 90% or more by volume of the total volume of gas present in the GDT chamber **104**, and, in some embodiments, in an amount of about 100% by volume of the total volume of gas present in the GDT chamber **104.**

According to some embodiments, the gas **M** may comprise a mixture of a first gas and a second gas *(e.g.,* an inert gas) different from the first gas with the first gas present in an amount of less than 50% by volume of the total volume of gas present in the GDT chamber **104** and the second gas present in an amount of at least 50% by volume of the total volume of gas present in the GDT chamber **104.** In some embodiments, the first gas is present in an amount in a range of about 5% to about 20% by volume of the total volume of gas present in the GDT chamber **104** and the second gas is present in an amount of about 50% to about 90% by volume of the total volume of gas present in the GDT chamber **104.** In some embodiments, the first gas is present in an amount of about 10% by volume of the total volume of gas present in the GDT chamber **104** and the second gas is present in an amount of about 90% by volume of the total volume of gas present in the GDT chamber **104.** In some embodiments, the second gas is helium, which may be present in the proportions described above for the second gas. In some embodiments, the first gas (which may be present in the proportions described above for the first gas) is selected from the group consisting of argon, neon, hydrogen, and/or nitrogen, and the second gas is helium (which may be present in the proportions described above for the second gas).

The GDT **100** may be assembled as follows. The terminal electrodes **132** and **134** are inserted through the openings **159.** The bonding layers **137** are heated to bond the terminals **132, 134** to the insulator **110** in the openings **124.** The seals **138** are installed or formed about the posts **132B, 134B** to secure the electrodes **132, 134** in place and hermetically seal the openings **159.** According to some embodiments, the seals **138** are metal solder or brazings, which may be formed of silver-copper alloy, for example.

The inner electrodes **E1-E14** are installed in the cavity **120.** More particularly, the electrodes **E1-E14** are each installed in a respective set of slots between the locator features **116** as shown in **FIG. 6****.**

The trigger device **150** is placed over the inner electrodes **E1-E14** so that the bottom side **154B** rests on the top edges **142A (****FIG. 7****)** of the inner electrodes **E1-E14**. The trigger device **150** is aligned such that the through holes **159** are each aligned with a respective one of top edges **142A** of the electrodes **E1-E14, 134,** and the interface layers **160** therein are located on or closely adjacent said respective top edges **142A.**

The insulator plate **136** and the cover **130** are then placed over the trigger device **150.** The cover **130** is bonded to the top face **118** of the insulator **110** to form the housing **102** and gas-tight sealed chamber **104.** According to some embodiments, the cover **130** is sealingly secured to the insulator **110** by brazing or heating the cover **130** and thereby melt-bonding the bonding layer **139** to the cover **130.** The bonding layer **139** may be sprayed onto or otherwise applied to the insulator **110.**

In some embodiments, the components of the GDT **100** are disposed in an assembly chamber during the steps of placing the cover **130** on the insulator **110** and securing the cover **130** to the insulator **110** to enclose and seal the chamber **104.** The assembly chamber is filled with the gas **M** at a prescribed pressure and temperature. As a result, the gas **M** is thereafter captured and contained in the chamber **104** of the assembled GDT **100** at a prescribed pressure and temperature. The prescribed pressure and temperature are selected such that the gas **M** is present at a desired operational pressure when the GDT **100** is installed and in use at a prescribed service temperature.

In some embodiments, the pressure of the gas **M** in the chamber **104** of the assembled GDT **100** is in the range of from about 50 to 1000 mbar at 20 degrees Celsius.

According to some embodiments, the relative dimensions of the insulator **110,** the electrodes **E1-E14**, the trigger device **150,** the insulator plate **136,** and the cover **130** are selected such that the electrodes **E1-E14** are loosely captured between the substrate **152** and the insulator bottom wall **112** to permit the electrodes **E1-E14** to slide up and down a small distance. In some embodiments, the permitted vertical float distance is in the range of from about 0.05 to 0.5 mm. In other embodiments, the substrate **152** and the bottom wall **112** fit snuggly against or apply a compressive load to the electrodes **E1-E14**.

The electrodes **132, E1-E14**, **134** define a plurality of gaps **G** and a plurality of cells **C** between each pair of electrodes **132**, **E1-E14**, **134**. According to some embodiments, the minimum width **W1** (**FIG. 6**) of each gap **G** (*i.e.,* the smallest gap distance between the two electrode surfaces forming the cell **C**) is in the range of from about 0.2 to 1.5 mm.

The through holes **159** associated with the resistor links **R1-R14** are positioned over the top edges **142A, 134C** of the electrodes **E1-E14** and **134,** respectively. As a result, the terminal layer **160** of each resistor link **R1-R14** is positioned on or closely adjacent the corresponding top edge **142A**, **134C** through the corresponding through hole **159.**

In use, the resistor links **R1-R14** are electrically coupled to the electrodes **E1-E14**, **134** through their respective terminal layers **160.** Because the electrodes **E1-E14** are floating or not fully fixed in the housing **102** and the terminal electrode **134** is spaced from the trigger device **150,** it may not be possible to ensure tight contact between the resistor links **R1-R14** and the electrodes **E1-E14**, **134.** As a result, a small gap **J** (**FIG. 7**) may be present between each resistor link **R1-R14** and its electrode **E1-E14**, **134.** According to some embodiments, each gap **J** has a width in the range of from about 0 to 0.5 mm. During a surge event, this gap **J** may cause sparking between the resistor link **R1-R14** and the electrode **E1-E14**, **134.** If the sparking is applied to the resistor layer **164,** such sparking may damage the resistor layer **164,** which may in turn enlarge the gap and adversely affect performance of the GDT **100** (*e.g*., increase the required spark over voltage).

The terminal interface layers **160** can prevent or reduce such damage to the resistor links **R1-R14** and thereby improve the performance and service life of the GDT **100.** The material of the terminal interface layers **160** has an electrical conductivity substantially the same as the electrode and greater than that of the resistor layer **164** so that the aforementioned sparking is eliminated or reduced. Moreover, the material of the terminal interface layers **160** may be more resistant to degradation from etching than the material of the resistor layer **164.**

Advantageously, the plurality of spark gaps **G** are housed or enveloped in the same housing **102** and chamber **104.** The plurality of cells **C** and spark gaps **G** defined between the electrodes **132, E1-E14**, **134** are in fluid communication so that they share the same mass or volume of gas **M.** By providing multiple electrodes, cells and spark gaps in one common or shared chamber **104,** the size and number of parts can be reduced. As a result, the size, cost and reliability of the GDT **100** can be reduced as compared to a plurality of individual GDTs connected in series.

Moreover, the trigger device **150** including the trigger circuit **151** is housed or enveloped in the same housing **102** and chamber **104** as the electrodes **132, E1-E14**, **134,** and is likewise in fluid communication with the same mass of gas **M.** As a result, the size, cost and reliability of the GDT **100** can be reduced as compared to a plurality of individual GDTs connected in series with an external trigger circuit.

The arcuate configurations of the electrodes **E1-E14** can help to ensure that, in the case of a surge event, spark over occurs between the midsections of the electrodes **E1-E14,** not at their edges.

The floating or semi-fixed mounting of the electrodes **E1-E14** in the housing **102** can facilitate ease of assembly.

The performance attributes of the GDT **100** can be determined by selection of the gas **M**, the pressure of the gas **M** in the chamber **104**, the dimensions and geometrics of the electrodes **132**, **E1-E14**, **134**, the geometry and dimensions of the housing **102**, the sizes of the gaps **G**, and/or the electrical resistances of the resistor links **R1-R14.**

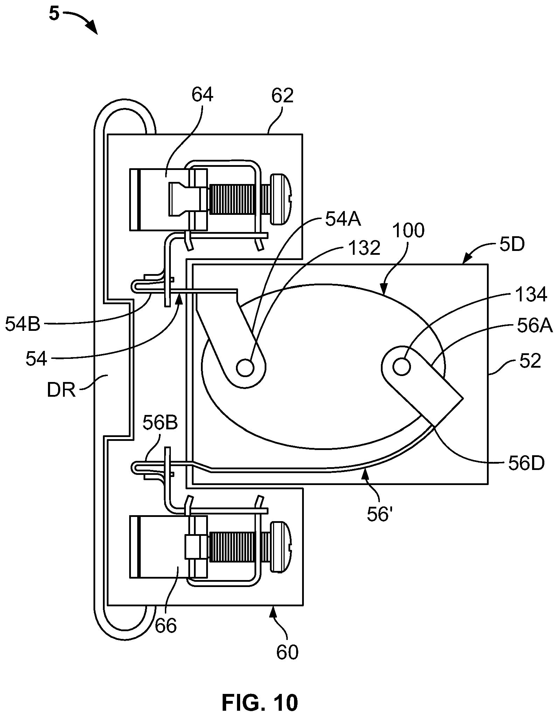

In some embodiments and with reference to **FIG. 10**, an electrical assembly 5 according to embodiments of the invention is shown therein. The electrical assembly **5** incorporates the GDT **100.** The GDT **100** is mounted in an enclosure **52** of a GDT module **50** that is removeably and replaceably mounted on a base **60.** The base **60** is in turn mounted on a support **DR** to mechanically and electrically connect the GDT **100** to an electrical power system. In some embodiments, the support **DR** is a DIN rail. The base **60** includes an enclosure **62**, a first electrical connector **64** to which a first electrical wire **WL** (*e.g.,* a line wire) is secured and a second electrical connector **66** to which a second electrical wire **WN** (*e.g.,* a neutral wire) is secured. The GDT module **50** includes a jumper **54** including connectors **54A** and **54B.** The connector **54A** is secured to the terminal electrode **132** and the connector **54B** is releasably interlocked with the base connector **64.** The GDT module **50** further includes a second jumper **56** including connectors **56A** and **56B.** The connector **56A** is secured to the terminal electrode **134** and the connector **56B** is releasably interlocked with the base connector **66.** The jumper **56** may further include a thermal disconnector mechanism **56D.**

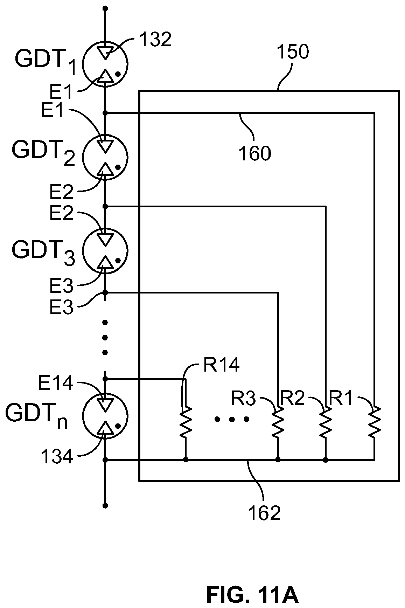

Brief reference is now made to **FIG. 11A**, which is an electrical schematic circuit of a modular, multi-cell gas discharge tube **100** as illustrated in **FIGS. 1-9** according to some embodiments of the present invention. As illustrated, in the electrical schematic context, the modular, multi-cell gas discharge tube **100** may include a plurality of single cell GDTs that are arranged serially between terminals **132** and **134.** For example, a first terminal **132** and the inner electrode **E1** may function as a first single cell **GDT1,** the inner electrode **E1** and the inner electrode **E2** may function as a second single cell **GDT2** that is serially connected to the first single cell **GDT1** and so on.

Additionally, a trigger circuit **150** may include multiple resistors **R1-R14** that may be connected between respective ones of the inner electrodes **E1-E14** and the terminal **134.** In some embodiments, the resistors **R1-R14** include resistive layers **164** and are electrically conductively coupled to the connecting layer **162** and interface layers **160.** As described above, the modular, multi-cell gas discharge tube **100** provides that the interface layers **160** are electrically conductively coupled to the inner electrodes **E1-E14**.

In use and operation, the first terminal **132** may be connected to a line or phase voltage of a single or multi-phase power system and the second terminal **134** may be connected to a neutral line of the single or multi-phase power system. The total arcing voltage of the modular, multi-cell gas discharge tube **100** generally corresponds to the sum of the arcing voltage of individual series connected single cell GDTs and thus exceeds the peak value of the system voltage. As such, when the modular, multi-cell gas discharge tube **100** is in conduction mode, the current flowing therethrough will be generally limited to the current corresponding to a surge event, such as lighting, and not from the system source.

Under normal *(i.e.,* non-conducting) conditions, since no current is flowing through **GDT₁,** then no current is flowing through **R1** and the voltage across **GDT₁** is the same as the line-neutral voltage at the second terminal **134.** When an overvoltage is applied to the system, the overvoltage will be applied to the first terminal **132**, which is the top electrode of **GDT₁.** Since the lower electrode of **GDT₁,** which is the inner electrode **E1,** is at the same potential as the second terminal **134, GDT1** begins to conduct electrical current and the overvoltage is applied to the second **GDT2,** which includes inner electrodes **E1** and **E2.** Also, once **GDT₁** begins to conduct, a small current will flow through resistor **R1**. In some embodiments, the current may only flow through resistor **R1** until **GDT2** begins to conduct, which may be a very short period of time. For example, current may only flow through **R1** for a time interval that is less than 1 microsecond.

As provided above, as soon as **GDT₁** begins conducting, the overvoltage is applied to **GDT₂**, which then begins to conduct. Once **GDT₂** begins to conduct, the overvoltage is applied to **GDT₃**, which then begins to conduct. Similarly, resistor **R2** will conduct a small amount of current once **GDT₂** begins conducting until **GDT₃** begins to conduct. Once each of the series connected single cell GDTs conducts current, the GDTs stay in conduction mode until the overvoltage condition has ceased. Once the overvoltage condition ceases, the GDTs cease to conduct because the peak value of the system voltage is less than the total arcing voltage of the modular, multi-cell gas discharge tube **100.**

The quantity of gaps in the modular, multi-cell gas discharge tube **100** may vary depending on the operating voltage of the system. For example, for a 255V application, a modular, multi-cell gas discharge tube **100** may use between 14 and 21 total gaps between the terminal **132,** the inner electrodes **E1-E14** and the terminal **134.** Some embodiments provide that the quantity of gaps may be less than 14 if the system voltage is correspondingly less than the examples provided herein and the quantity of gaps may be greater than 21 if the system voltage is correspondingly greater than the examples provided herein.

Additionally, some embodiments provide that the resistance values of resistors **R1-R14** may be in a range between about 3 Ohms to about 500 Ohms, however, such embodiments are non-limiting and the resistance values may be less than 3 Ohms and/or greater than 500 Ohms. In some embodiments, the resistance values of resistors **R1-R14** may all be the same, while in other embodiments the resistor values of resistors **R1-R14** may be different from one another.

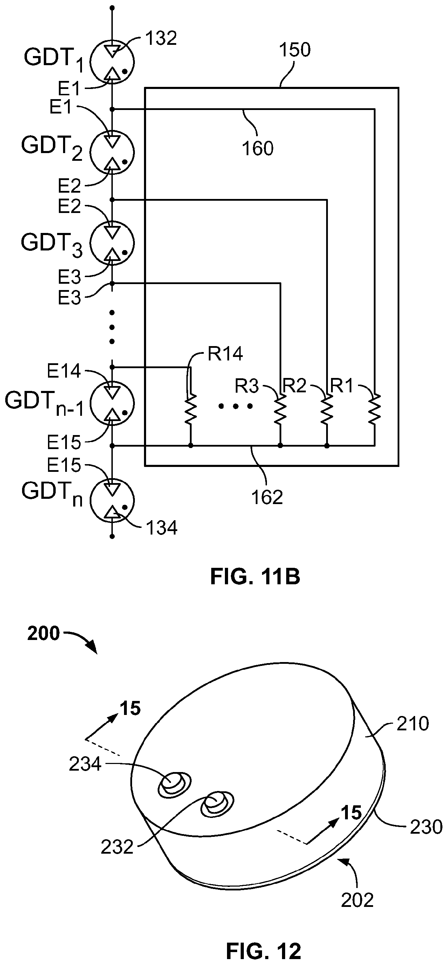

Brief reference is now made to **FIG. 11B**, which is an electrical schematic circuit of a modular, multi-cell gas discharge tube **100** as illustrated in **FIGS. 1-9** according to some other embodiments of the present invention. Many elements as discussed above regarding **FIG. 11A** are substantially the same and thus duplicative discussion thereof will be omitted. As illustrated, an additional gap corresponding to **GDTₙ** may be added in series with the circuit of **FIG. 11A****.** In this manner, instead of a single GDT (*e.g.,* **GDT₁**) beginning to conduct to trigger the remaining GDTs into conduction, both **GDT₁** and **GDTₙ** must begin conducting to trigger the conduction of the other GDTs. An advantage of having both **GDT₁** and **GDTₙ** to begin conducting is that if either of **GDT₁** or **GDTₙ** short circuit or begin to degrade, a gap will still be present in the other GDT and the device may still function. Such advantage may provide increased safety in operation, although response time may be increased.

Although the use and operation described above are provided in the context of the modular, multi-cell gas discharge tube **100,** the description of the use and operation may be application to other embodiments described herein.

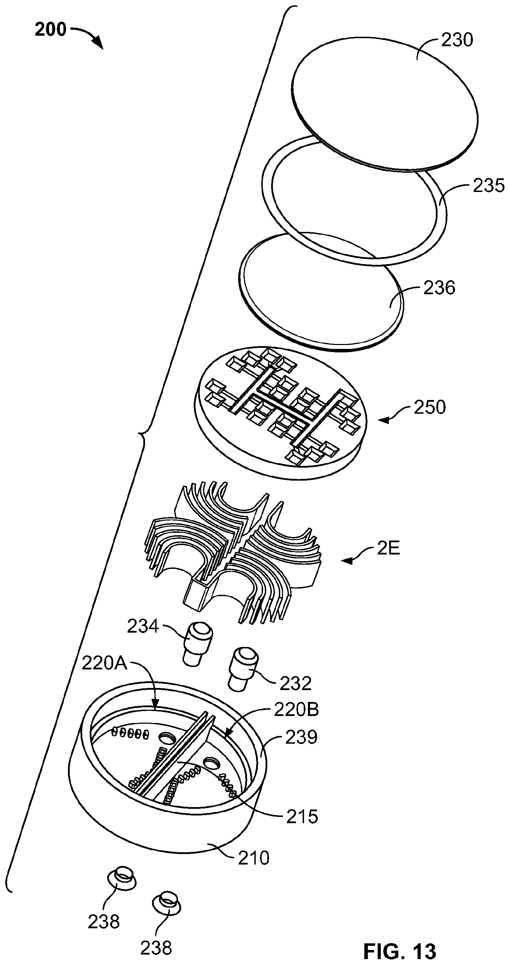

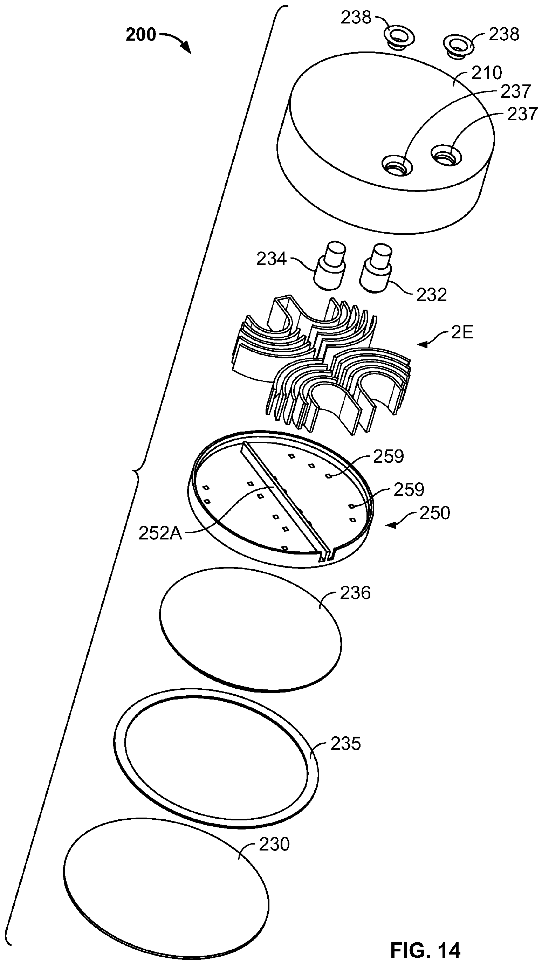

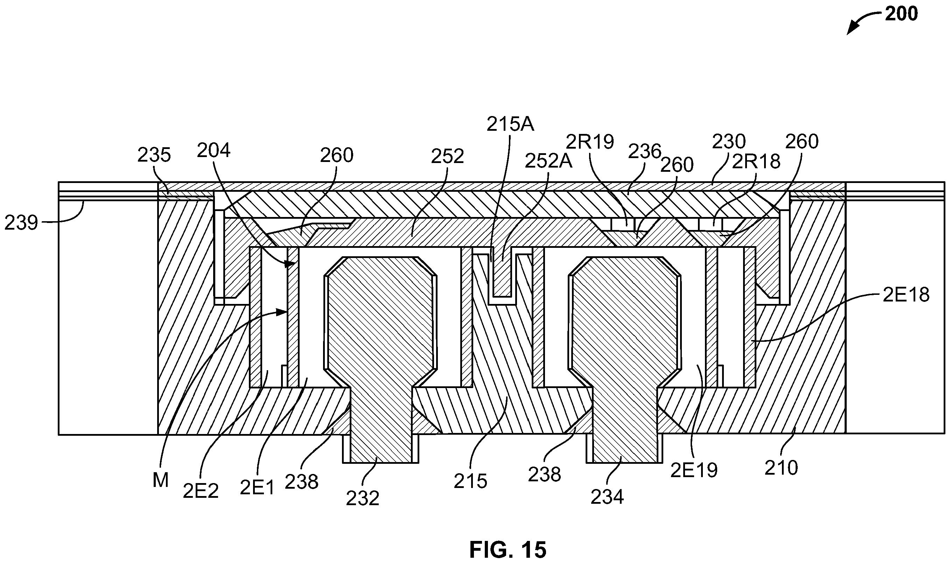

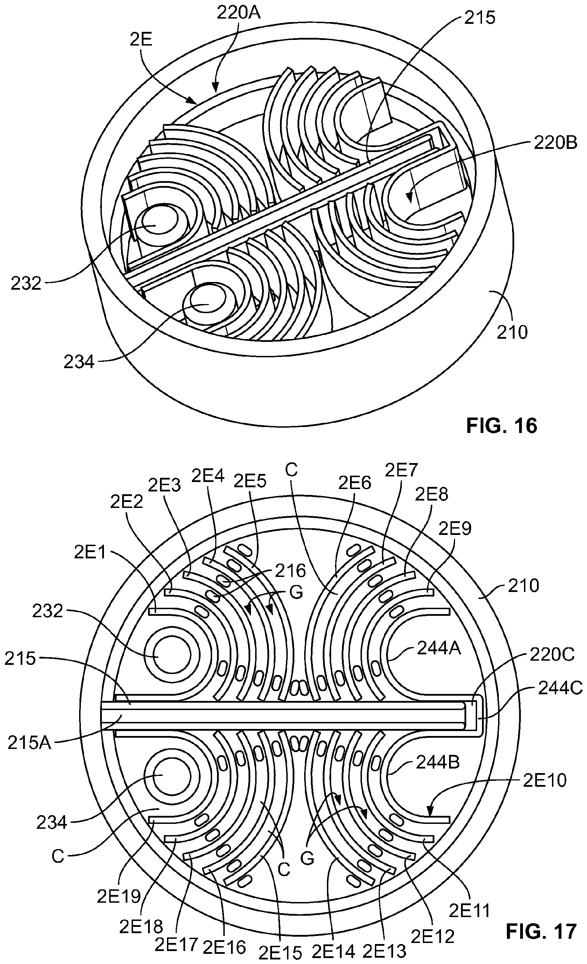

With reference to **FIGS. 12-18**, a modular, multi-cell GDT **200** according to further embodiments of the invention is shown therein. The GDT **200** includes an insulator **210**, a cover **230**, a first terminal electrode **232**, a second terminal electrode **234**, a set **2E** of inner electrodes **2E1-2E19**, an insulator **236,** seals **235**, **238**, bonding layers **237, 239**, a trigger device **250**, and a selected gas **M** corresponding to the insulator **110**, the cover **130**, the first terminal electrode **132**, the second terminal electrode **134**, the inner electrodes **E1-E14**, the insulator **136**, the seals **135, 138**, the bonding layers **137, 13**9, the trigger device **150**, and the selected gas **M** of the GDT **100**, except as follows.

The electrodes **2E1-2E19**, the trigger device **250**, and the gas **M** are all contained in a hermetically sealed chamber **204** in a housing **202** formed by the insulator **210** and the cover **230.**

The insulator **210** includes an integral ceramic partition wall **215** that bisects the cavity **220.** The partition wall **215** divides the cavity **220** into subcavities **220A, 220B**. The substrate **252** of the trigger device **250** includes an integral ceramic rib **252A** that is received in a groove **215A** defined in the top edge of the partition wall **215.** The insulator **210,** the cavity **220** and the chamber **204** are cylindrically shaped.

The terminal electrodes **232, 234** are secured and sealed by the bonding layers **237** and the seals **238** in openings **224** on the same lateral end of the cavity **220** and opposite sides of the partition wall **215.**

The arcuate inner electrodes **2E1-2E9** are secured in the subcavity **220A** and the arcuate inner electrodes **2E11-2E19** are secured in the subcavity **220B.** The inner electrode **2E10** includes an integral first portion **244A** in the subcavity **220A** and an integral second portion **244B** in the subcavity **220B.** The electrode portions **244A**, **244B** are connected by an integral connecting portion **244C** that extends through a slot **220C** defined between the sidewall **214** and an end of the partition wall **215.** The electrodes **2E1-2E19** are each arcuate, curved or bent plates that are curvilinear in lateral profile and straight in axial profile. The electrodes **2E1-2E19** are captured to be semi-fixed or floating by the locator features **216**, the sidewall **214** and the partition wall **215.**

The trigger device **250** includes a ceramic substrate **252,** connecting layers **262,** and resistor links **2R2-2R19** corresponding to the ceramic substrate **152,** connecting layers **162,** and resistor links **R1-R14** of the GDT **100.** The terminal interface layers **260** of the first connecting layer **262** and the resistor links **2R2-2R19** are positioned on or closely adjacent the top edges of the electrodes **2E1-2E19** and **234,** respectively, through the through holes **259** in the substrate **252.**

The GDT **200** includes twenty spark gaps G and twenty cells C. In use, spark over occurs sequentially from the electrode **232**, through the electrodes **2E1-2E19** and to the electrode **234.** Spark over directly between the electrodes **2E1-2E9** in the subcavity **220A** and the electrodes **2E11-2E19** in the subcavity **220B** is prevented by the electrically insulating partition wall **215** and rib **252A.** The trigger device **250** operates in the same manner as described above with regard to the trigger device **150** to control the firing sequence and timing.

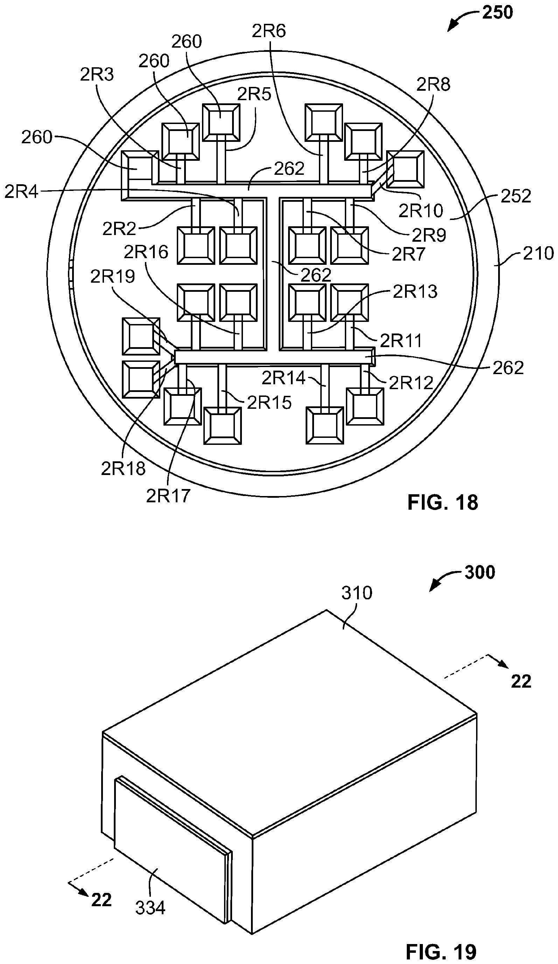

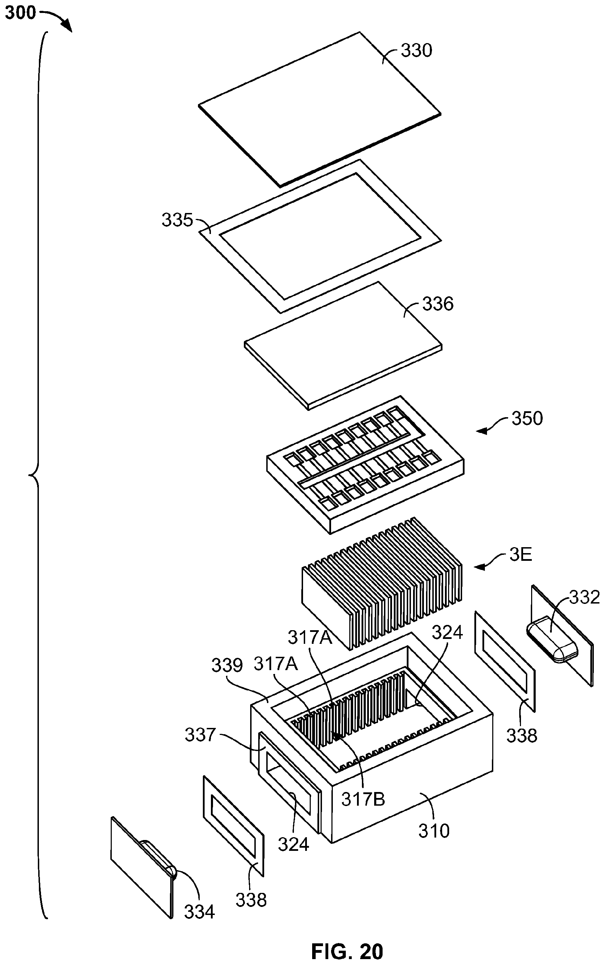

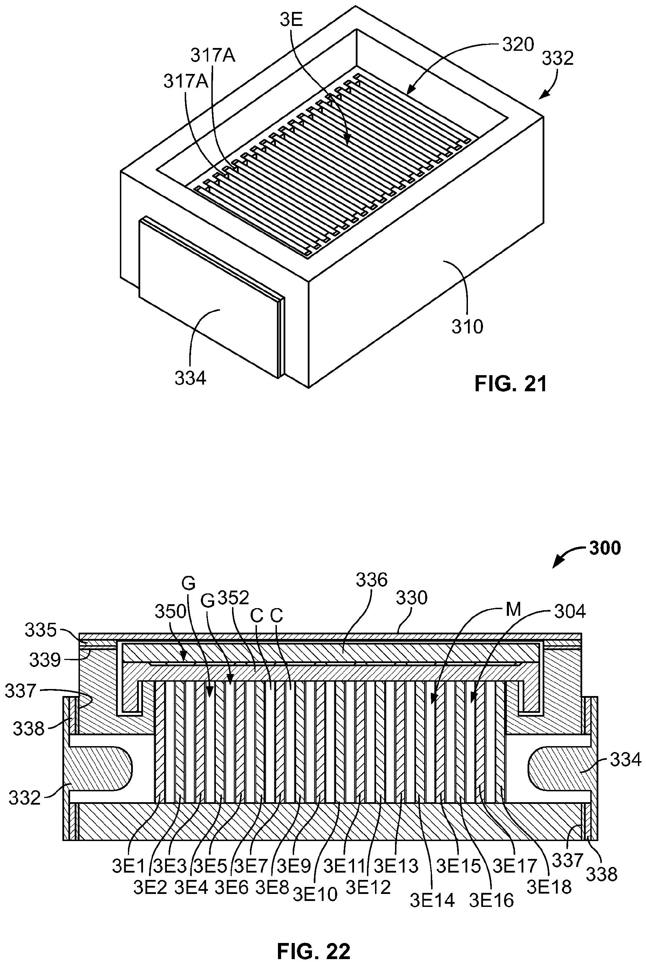

With reference to **FIGS. 19-24****,** a modular, multi-cell GDT **300** according to further embodiments of the invention is shown therein. The GDT **300** includes an insulator **310,** a cover **330,** a first terminal electrode **332,** a second terminal electrode **334,** a set **3E** of inner electrodes **3E1-3E18,** an insulator **336**, seals **335, 338** bonding layers **337, 339**, a trigger device **350,** and a selected gas **M** corresponding to the insulator **110,** the cover **130,** the first terminal electrode **132,** the second terminal electrode **134,** the inner electrodes **E1-E14,** the insulator **136,** the seals **135, 138,** the bonding layers **137, 139,** the trigger device **150,** and the selected gas **M** of the GDT **100,** except as follows. The electrodes **3E1-3E18,** the trigger device **350,** and the gas **M** are all contained in a hermetically sealed chamber **304** in a housing **302** formed by the insulator **310** and the cover **330.**

The insulator **310** includes integral ribs **317A** defining locator slots **317B** therebetween. Opposed end openings **324** communicate with the cavity **320.** The insulator **310,** the cavity **320** and the chamber **304** are rectangular in cross-section.

The terminal electrodes **332** and **334** are secured and sealed by the bonding layers **337** in the openings **324.** The inner electrodes **3E1-3E18** are substantially flat plates with opposed planar faces. The electrodes **3E1-3E18** are seated in the slots **317B** and thereby semi-fixed or floatingly mounted in the chamber **304.**

The trigger device **350** includes a ceramic substrate **352,** connecting layers **362,** and resistor links **3R2-3R18** corresponding to the ceramic substrate **152,** connecting layers **162,** and resistor links **R1-R14** of the GDT **100.** The terminal interface layers **360** of the connecting layer **362** and the resistor links **3R2-3R18** are positioned on or closely adjacent the top edges of the electrodes **3E1-3E18** and **334,** respectively, through the through holes **359** in the substrate **352.**

The GDT **300** includes nineteen spark gaps **G** and nineteen cells **C.** In use, spark over occurs sequentially from the electrode **332,** through the electrodes **3E1-3E18** and to the electrode **334.** The trigger device **350** operates in the same manner as described above with regard to the trigger device **150** to control the firing sequence and timing.

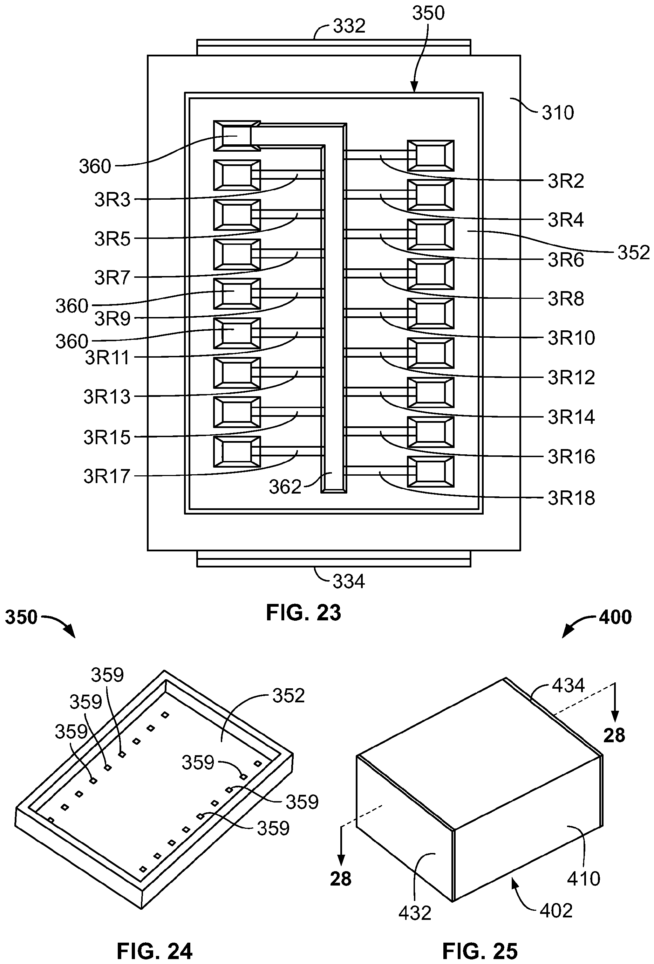

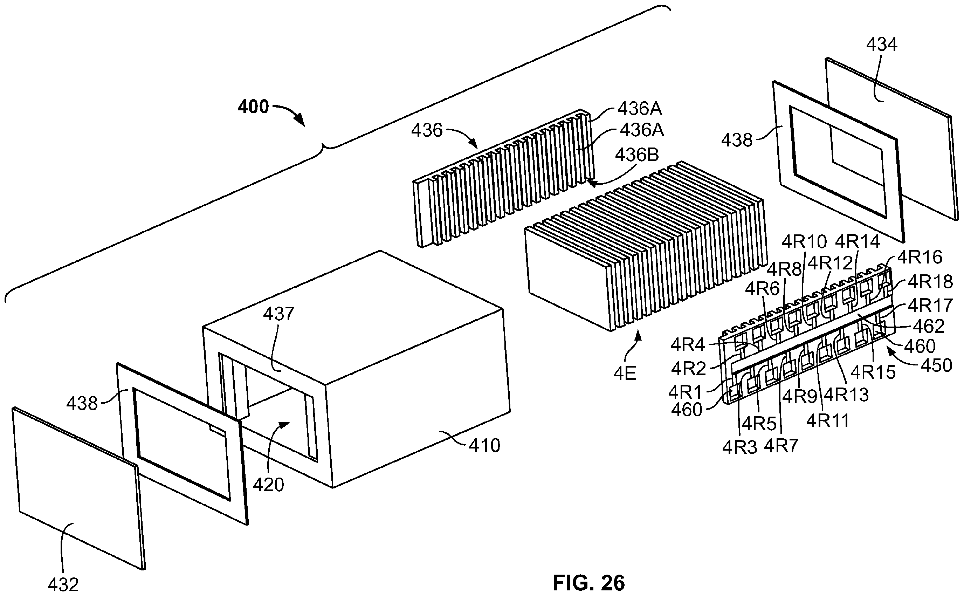

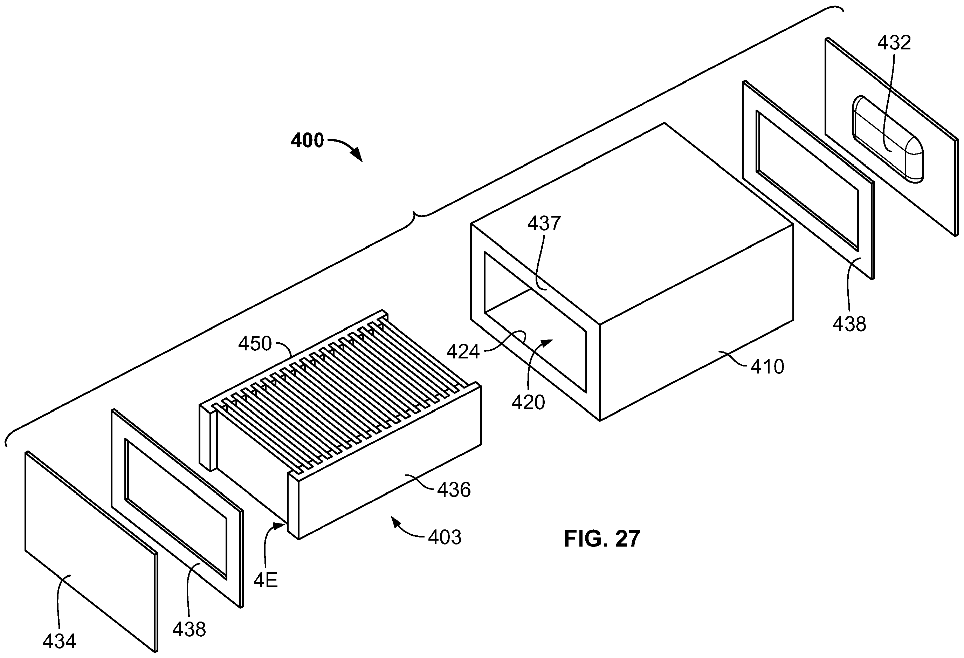

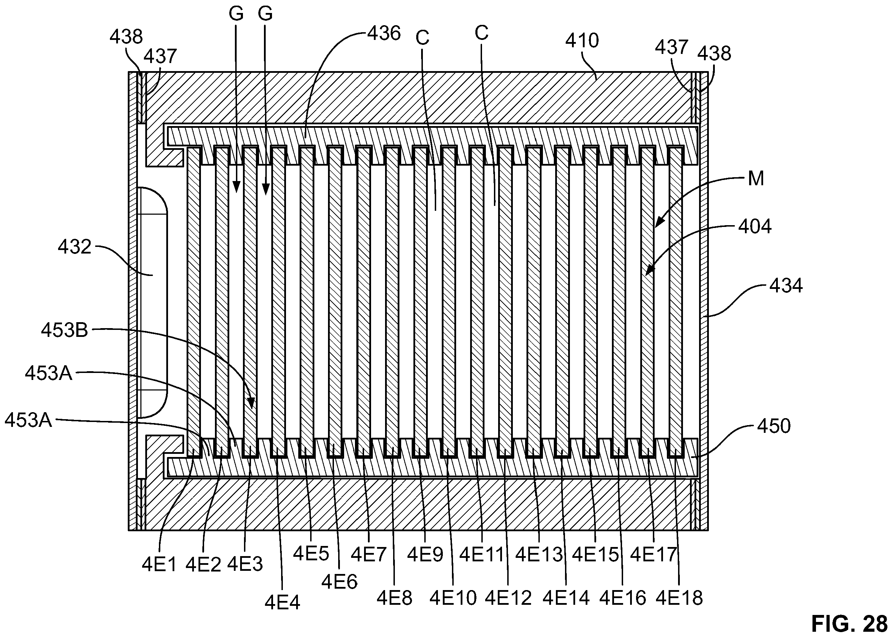

With reference to **FIGS. 25-29**, a modular, multi-cell GDT **400** according to further embodiments of the invention is shown therein. The GDT **400** includes an insulator **410,** a first terminal electrode **432,** a second terminal electrode **434,** a set **4E** of inner electrodes **4E1-4E18**, an insulator **436,** bonding layers **437,** seals **438,** a trigger device **450,** and a selected gas **M** corresponding to the insulator **110,** the first terminal electrode **132,** the second terminal electrode **134,** the inner electrodes **E1-E14**, the insulator **136,** the bonding layer **137,** the seal **138,** the trigger device **150,** and the selected gas **M** of the GDT **100,** except as follows.

The electrodes **4E1-4E18**, the trigger device **450,** and the gas **M** are all contained in a hermetically sealed chamber **404** in a housing **402** formed by the insulator **410** and the electrodes **432, 434.**

The insulator **410** is generally tubular and has opposed end openings **424** communicating with the cavity **420.** The insulator **410,** the cavity **420** and the chamber **404** are rectangular in cross-section.

The insulator **436** is a plate having integral ribs **436A** defining locator slots **436B** therebetween.

The trigger device **450** includes a ceramic substrate **452,** connecting layers **462**, and resistor links **4R1-4R18** corresponding to the ceramic substrate **152**, connecting layers **162**, and resistor links **R1-R18**. The substrate **452** includes integral ribs **453B** defining locator slots **453B** therebetween.

The inner electrodes **4E1-4E18** are substantially flat plates with opposed planar faces.

To assemble the GDT **400,** the inner electrodes **4E1-4E18** are seated in the slots **436B** of the insulator plate **436** on one side edge and are seated in the slots **453B** of the trigger device **450** on the side edge to form a cassette or subassembly **403** as shown in **FIG**. **27****.** The subsassembly **403** is inserted into the cavity **420** through the opening **424.** The terminal electrodes **432** and **434** are secured and sealed by the bonding layers **437** in the openings **424.** The inner electrodes **4E1-4E18** are semi-fixed or floatingly secured in the sealed chamber **404** by the locator ribs **436A**, **453A** and the top and bottom walls of the insulator **410.**

The terminal interface layers **460** of the resistor links **4R1-4R18** are positioned on or closely adjacent the top edges of the electrodes **4E1-4E18** and **434**, respectively, through the through holes **459** in the substrate **452.**

The GDT **400** includes nineteen spark gaps **G** and nineteen cells **C.** In use, spark over occurs sequentially from the electrode **432**, through the electrodes **4E1-4E18** and to the electrode **434.** The trigger device **450** operates in the same manner as described above with regard to the trigger device **150** to control the firing sequence and timing.

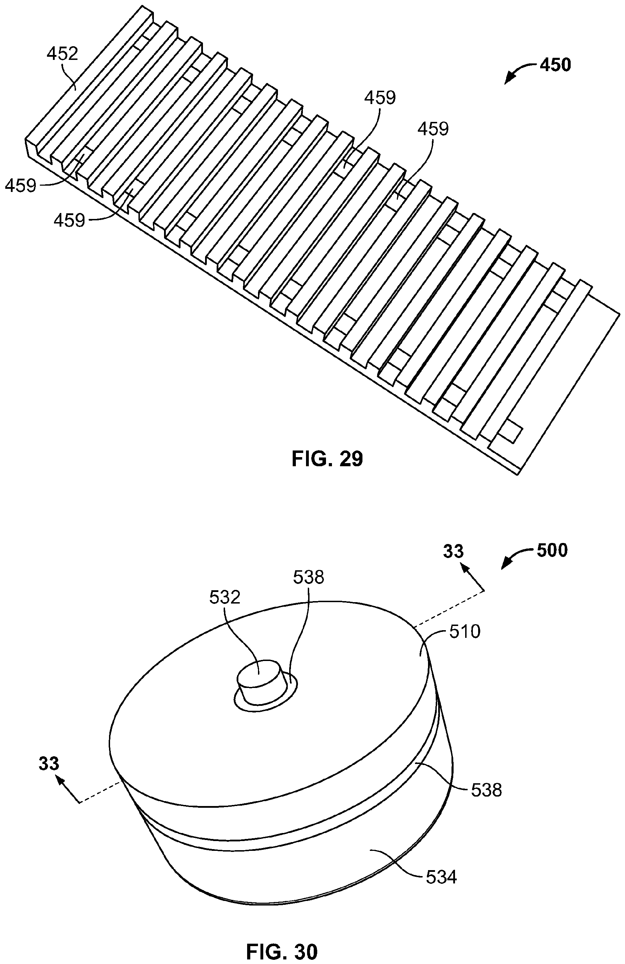

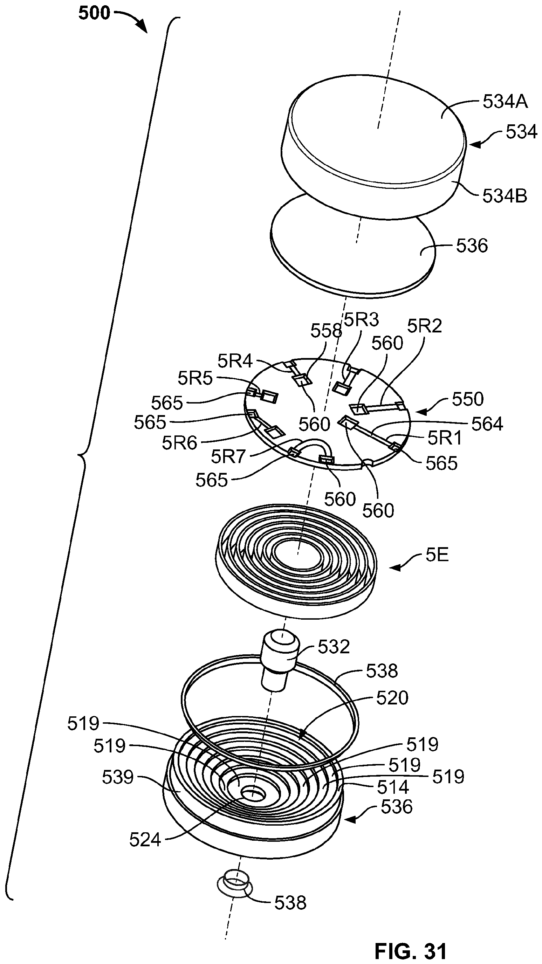

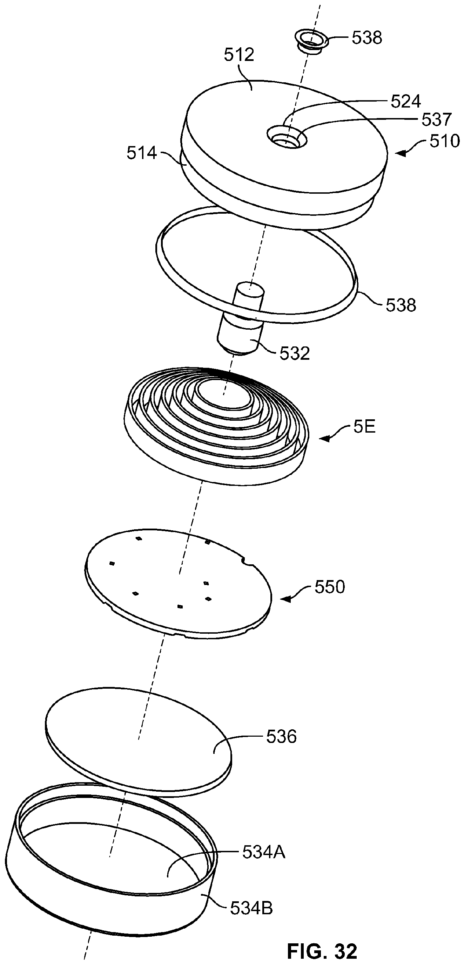

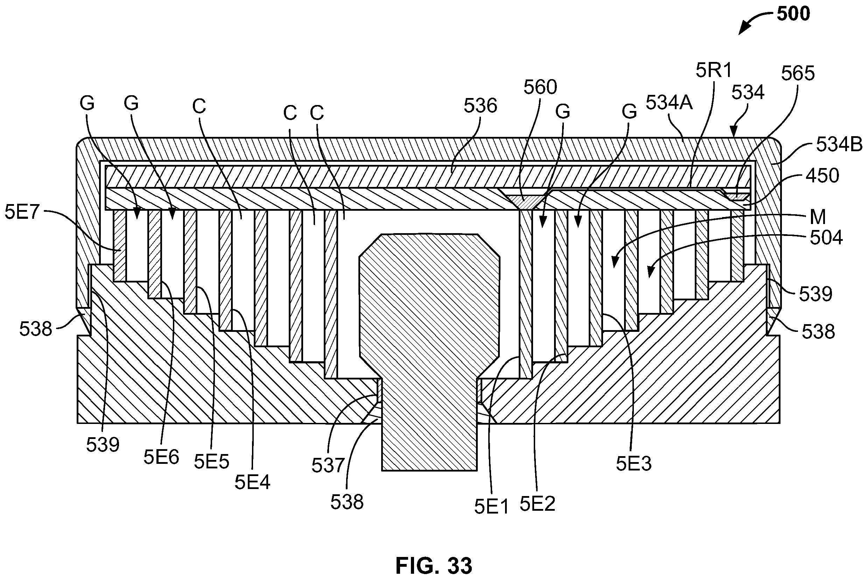

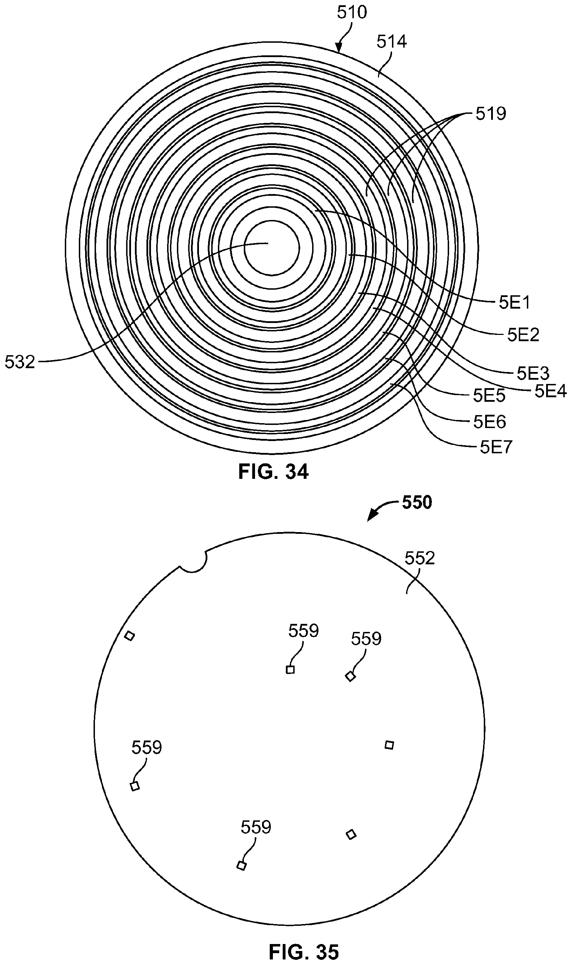

With reference to **FIGS. 30-35**, a modular, multi-cell GDT **500** according to further embodiments of the invention is shown therein. The GDT **500** includes an insulator **510**, a first terminal electrode **532**, a second terminal electrode **534**, a set **5E** of inner electrodes **5E1-5E7**, an insulator **536**, a seal **538**, bonding layers **537**, **539**, a trigger device **550**, and a selected gas **M** corresponding to the insulator **110**, the first terminal electrode **132**, the second terminal electrode **134**, the inner electrodes **E1-E14**, the insulator **136**, the seals **138**, the bonding layers **137**, **139**, the trigger device **150**, and the selected gas **M** of the GDT **100,** except as follows.

The electrodes **5E1-5E7**, the trigger device **550**, and the gas **M** are all contained in a hermetically sealed chamber **504** in a housing formed by the insulator **510** and the electrode **534.** The electrode **534** serves as a cover.

The insulator **510** includes an electrode opening **524** within which the terminal electrode **532** is secured and hermetically sealed by a seal **538** and the bonding layer **537.** The insulator **510** includes a series of concentric, annular steps **519.** The steps **519** progressively increase in height in the direction from the terminal electrode **532** to the side wall **514.** The insulator **510,** the cavity **520** and the chamber **504** are tubular or cylindrically shaped.

The terminal electrode **534** includes an end wall **534A** and an annular side wall 534B. The side wall **534B** is secured to the side wall **514** of the insulator **510** by the bonding layer **539.** The interface between the terminal electrode **534** and the side wall **514** is hermetically sealed by a seal **538** and the bonding layer **539.**

The inner electrodes **5E1-5E7** are cylindrical and concentrically mounted on respective ones of the steps **519** in the chamber **504.** The inner electrodes **5E1-5E7** are radially spaced apart to define annular spark gaps **G** and cells **C** therebetween. The electrodes **5E1-5E7** are radially constrained by the steps **519** and axially constrained by the insulator bottom wall **512** and the trigger device **550** so that the electrodes are semi-fixed or floating in the chamber **504.** The trigger device **550** is in turn constrained by the insulator plate **536** and the terminal electrode **534.**

The trigger device **550** includes a ceramic substrate **552** and resistor links **5R1-5R7** corresponding to the ceramic substrate **152** and resistor links **R1-R14** of the GDT **100.** The terminal interface layers **560** of the resistor links **5R1-5R7** are positioned in recesses **558** and on or closely adjacent the top edges of the electrodes **5E1-5E7** and **534,** respectively, through the through holes **559** in the substrate **552.** Each resistor link **5R1-5R7** includes a terminal contact **565** on its end opposite its terminal interface layer **560.** The resistor links **5R1**-**5R7**, respectively, are electrically connected to the electrode **534** via their respective terminal contacts **565.** Small gaps may be present between the electrode **534** and some or all of the terminal contacts **565.** According to some embodiments, the terminal contacts **565** are formed of a material as described above for the terminal interface layers **160** in order to prevent sparking and degradation of the resistor layers **564** of the resistor links **5R1-5R7** as discussed above with regard to the terminal interface layers **160** and the resistor layers **164.**

The GDT **500** includes eight spark gaps **G** and eight cells **C.** In use, spark over occurs sequentially from the electrode **532,** through the electrodes **5E1-5E7** and to the electrode **534.** The trigger device **550** operates in the same manner as described above with regard to the trigger device **150** to control the firing sequence and timing.

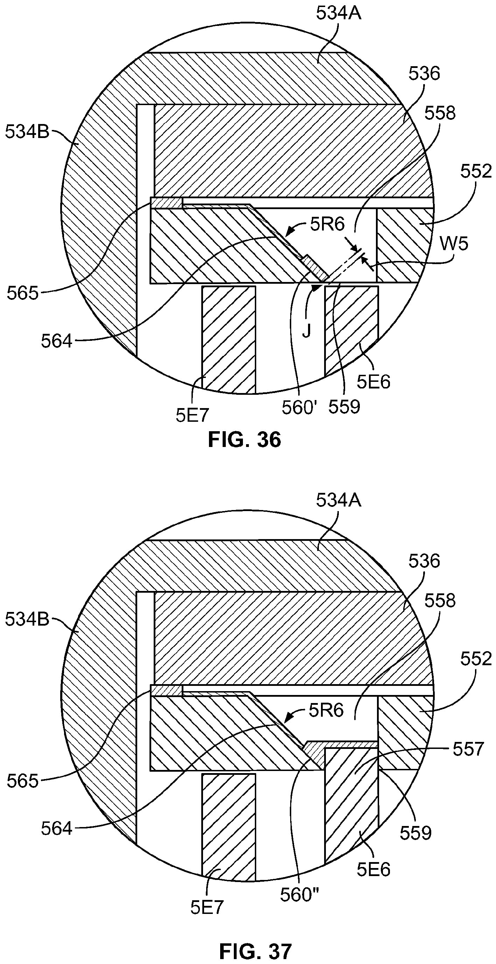

The terminal interface layers **560** may be masses or plugs of the electrically conductive material that substantially fill the holes **559** as shown and described above with regard to the terminal interface layers **160** and with reference to **FIG. 7****.** According to further embodiments and as shown in **FIG. 36**, the terminal interface layers **560** may take the form of relatively thin layers **560'** and the through holes **559** may remain open. The terminal interface layers **160, 260, 360, 460** may likewise be formed in this manner. A gap **J** may be present between each or some of the terminal interface layers **560'** and their respective electrodes **5E1-5E7.** According to some embodiments, each of the gaps **J** has a width **W5** of less than about 0.5 mm.

According to further embodiments and with reference to **FIG. 37****,** each electrode **5E1-5E7** may include an integral contact protrusion or pin **557** projecting upwardly from its top edge. The pin **557** is received in a respective through hole **559** and extends into the associated recess **558.** In this embodiment, each terminal interface layer **560** takes the form of a terminal interface layer **560"** that fills the space about the pin **557** in the recess **558.** Each terminal interface layer **560"** is bonded to its corresponding resistor layer **564** to the ceramic **552** and to the pin **557** to effect electrical and mechanical connection therebetween. Thus, in this embodiment, the gaps between each terminal interface layer **560** and its electrode may be eliminated. The terminal interface layers **160, 260**, **360**, **460** may likewise be formed in this manner. This embodiment may be manufactured by installing the pins **557** in the through holes **559,** and then placing the material of the terminal interface layers **560"** in the recesses **558** in molten or liquid form, after which the material solidifies (*e.g*., by drying or cooling) or heating (sintering) and bonds to the resistor layer, ceramic and pin.

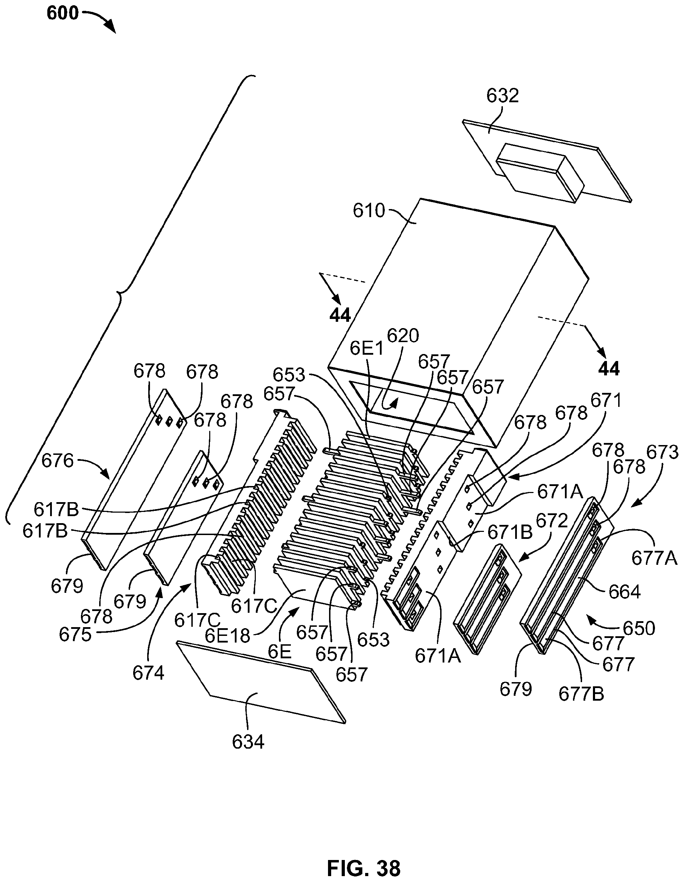

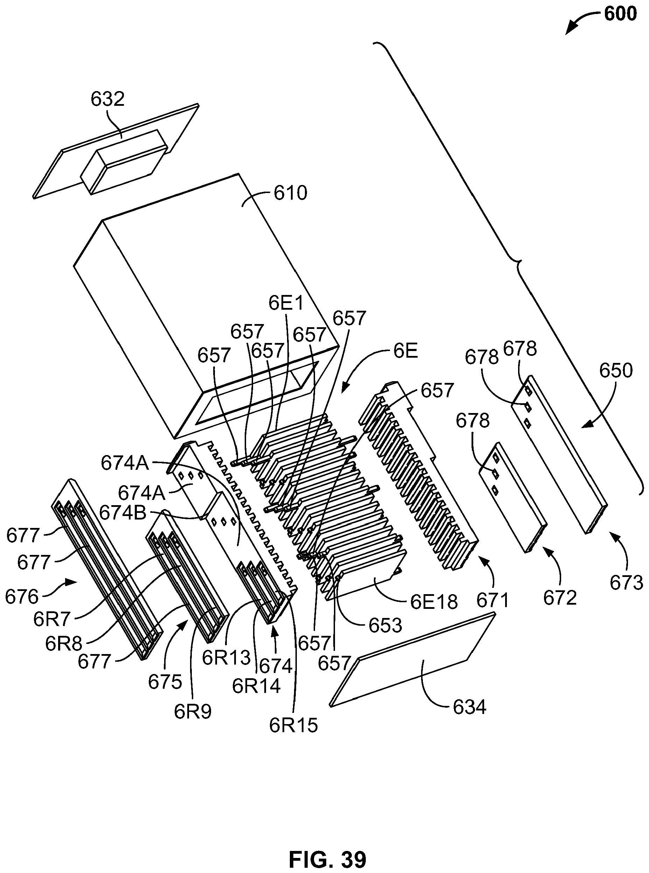

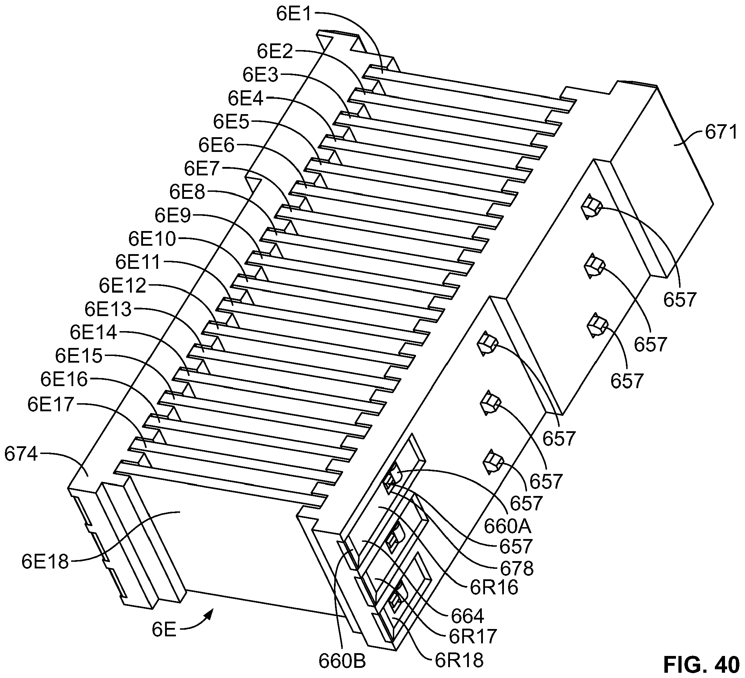

With reference to **FIGS. 38-44**, a modular multi-cell GDT **600** according to further embodiments of the invention is shown therein. While **FIGS. 38** and **39** are exploded views, the GDT **600** will outwardly appear substantially the same as the GDT **400** when assembled. The GDT **600** includes an insulator **610**, a first terminal electrode **632**, a second terminal electrode **634**, a set **6E** of inner electrodes **6E1-6E18** (**FIG. 40**), bonding layers (not labeled), seals (not labeled), and a selected gas (not labeled) corresponding to the insulator **410,** the first terminal electrode **432,** the second terminal electrode **434,** the set **4E** of inner electrodes **4E1-4E18**, the bonding layers **437,** the seals **438,** and the gas **M** of the GDT **400,** except as discussed below. The GDT **600** further includes a multi-layered trigger device **650** corresponding to the trigger device **450.** The trigger device **650** performs the same function as the trigger device **450** in generally the same manner, but is differently constructed in order to provide improved and/or more consistent and reliable performance.

The inner electrodes **6E1-6E18** each include relatively short integral locator pins **653** (**FIGS. 38** **and** **39**) projecting from one side edge, and relatively long integral electrical contact pins **657** projecting from their opposed side edges. The contact pins **657** have different lengths and are staggered in height along the electrode side edges.

The trigger device **650** includes six discrete substrates **671, 672, 673, 674, 675,** and **676.** The substrates **671-676** may be formed in substantially the same manner and of the same material as the substrate **452.**

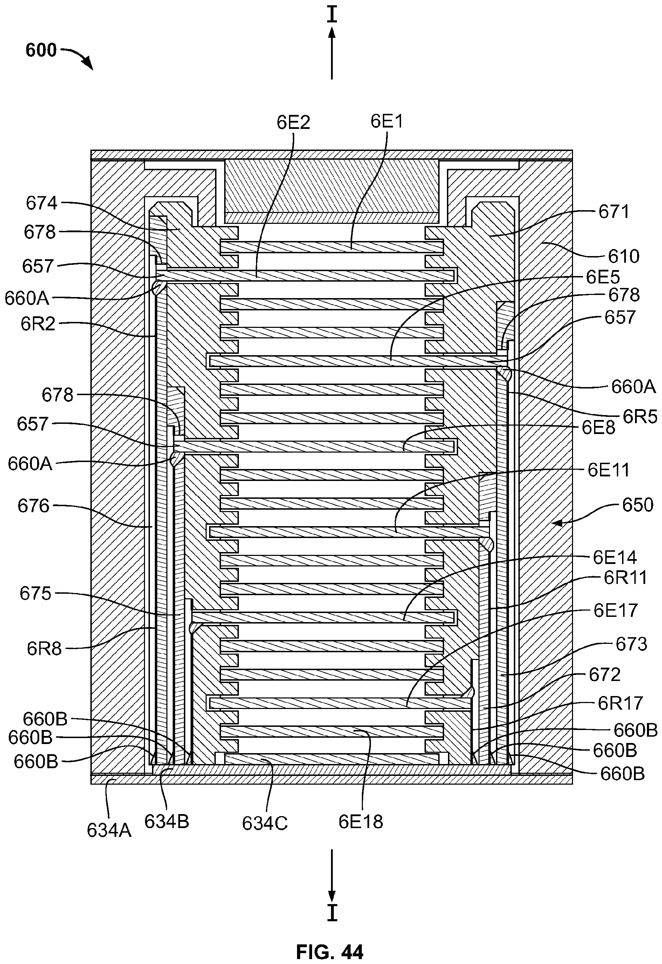

Each of the substrates **671-676** includes three longitudinally extending grooves **677** extending along a lengthwise axis **I-I** (**FIG. 44**) from a proximal end **677A** to an opposing distal end **677B** (**FIG. 38**). The distal ends **677B** each terminate proximate, at or closely adjacent a distal end **679** of the substrate **671-676**. Laterally extending through holes **678** extend fully through the thicknesses of the substrates **671-676**. The through holes **678** are axially staggered. One of the holes **678** terminates proximate the proximal end **677A** of each groove **677.**

The substrates **671** and **674** each include slots **617B** corresponding to slots **417B** to receive and to secure the inner electrodes **6E1-6E18.** The substrates **671, 674** also include locator recesses **617C** to receive the locator pins **653** to locate the electrodes **6E1-6E18** along the height axis. The substrate **671** includes axially distributed recesses **671A** with a step **671B** therebetween. The substrate **674** includes recesses **674A** with a step **674B** therebetween.

A respective resistor link **6R1-6R18 (****FIGS. 39-42****)** is located in each groove **677.** Each resistor link **6R1-6R18** includes a resistor layer **664** corresponding to the resistor layers **464,** and terminal interface layers **660A, 660B** corresponding to the terminal interface layers **460.** The interface layers **660A** are located at the through holes **678.** The interface layers **660B** are located at the distal ends **679.** The trigger device **650** does not include a conductive link corresponding to the connecting layer **462.**

The second terminal electrode **634 (****FIG. 44****)** includes an outer contact section **634A,** a trigger contact section **634B,** and an electrode gap surface **634C.**

The GDT **600** may be assembled in the same manner as the GDT **400,** except as follows. The substrates **671** and **674** are mounted on either side of the set **6E** of electrodes as shown in **FIG. 40**. The edge portions of the electrodes **6E1-6E18** are received in the slots **617B** of the substrates **671, 674** and the electrodes **6E1-6E18** are thereby captured between the substrates **671, 674.** The locator pins **653** are seated in the locator recesses **617C.** The contact pins **657** project through the holes **678.** On one side, the three distal most contact pins **657** extend into the holes **678** the resistor links **6R16-6R18** of the substrate **671** such that they make contact with or are positioned closely adjacent to the interface layers **660A** of the resistor links **6R16-6R18.** On the other side, the distalmost contact pins **657** extend into the holes **678** of the resistor links **6R13-6R15** of the substrate **674** such that they make contact with or are positioned closely adjacent the interface layers **660A** of the resistor links **6R13-6R15.**

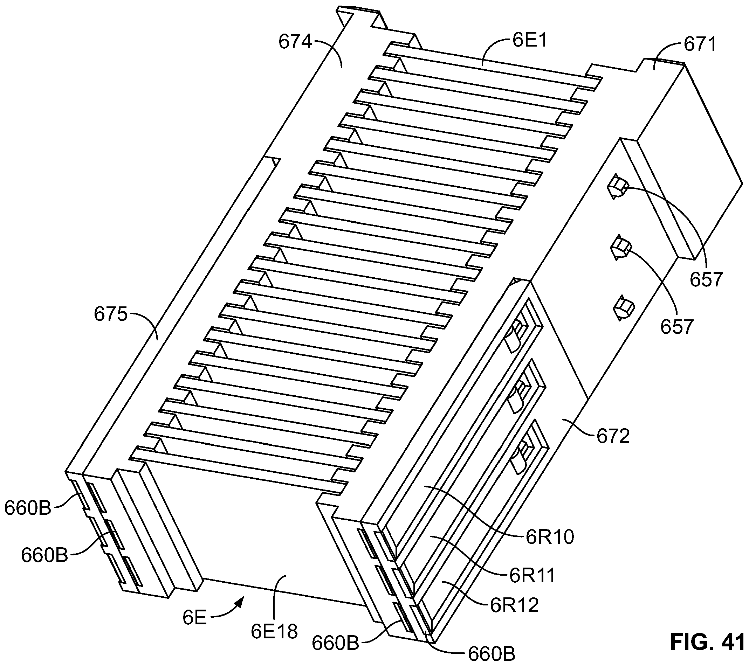

With reference to **FIG. 41**, the substrate **672** is mounted in the lower recess **671A** of the substrate **671** such that the middle three contact pins **657** on that side extend through the holes **678** in the substrate **672.** These contact pins **657** make contact with or are located closely adjacent the interface layers **660A** of the resistor links **6R10-6R12.** Similarly, the substrate **675** is mounted in the lower recess **674A** of the substrate **674** such that the middle three contact pins **657** on that side extend through the holes **678** in the substrate **675.** These contact pins **657** make contact with or are located closely adjacent to the interface layers **660A** of the resistor links **6R7-6R9.**

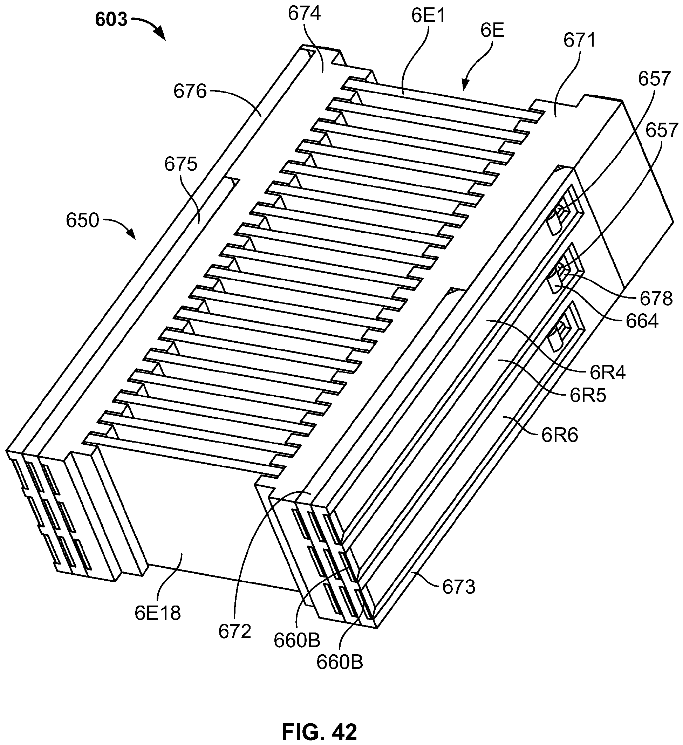

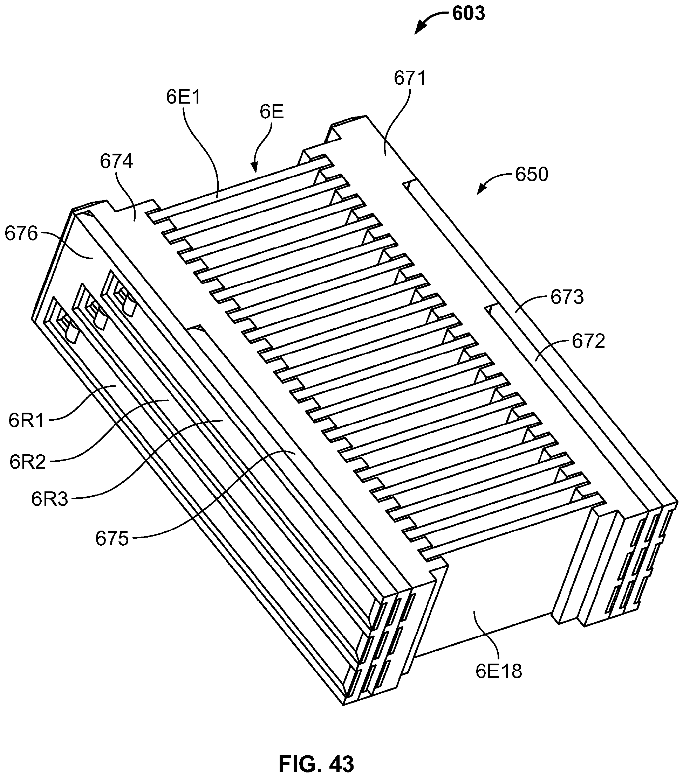

With reference **FIG. 42**, the substrate **673** is mounted over the substrate **672** and in the upper recess **671A** of the substrate **671.** The three proximal contact pins **657** extends through the through holes **628** and the substrate **673** and make contact with or are positioned closely adjacent the interface layers **660A** of the resistor links **6R4-6R6.** Similarly, the substrate **676** is mounted over the substrate **675** and in the upper recess **674A** of the substrate **674.** The three proximal contact pins **657** extend through the holes **678** in the substrate **676** and make contact with or are positioned closely adjacent to the interface layers **660A** of the resistor links **6R1-6R3.** A subassembly **603** as shown in **FIGS. 42** and **43** is thus formed.

The subassembly **603** is inserted in the passage **620** of the housing **610.** The terminal electrodes **632, 634** are secured to the housing **610** on either end. As best as seen in **FIG. 44**, the substrate distal ends **679** are located adjacent the terminal electrode section **634A** so that the distal interface layers **660B** are located in contact with or closely adjacent the section **634A.** The terminal electrode section **634C** is positioned at a prescribed distance from the inner electrode **6E18** define a gap **G.**

In this manner, each of the inner electrodes **6E1-6E18** is electrically connected directly to the terminal electrode **634** through its respective contact pin **657** and its respective resistor link **6R1-6R18.**

The resistor links **6R1-6R18** (and, in particular, the resistor layers **664** thereof) are relatively layered so that the resistor links of each substrate **671-676** lie in different longitudinally and heightwise extending planes, which planes are laterally spaced apart. The substrates **671-676** electrically insulate the resistor links **6R1-6R18** from one another.

The multi-layered trigger device **650** can provide certain advantages. The resistor layers **664** of each of the resistor links **6R1-6R18** can be formed of sufficient length to reliably provide electrical resistance that is sufficiently high and stable for the intended operation. Also, by eliminating the connecting layer **462,** the risk of unintended electrical resistance in that layer (*e.g.,* caused by damage in use) can be eliminated. Thus, the trigger device **650** can be constructed to have robust electrical performance while also permitting the compact form factor and other advantages (*e.g*., in manufacture) of the rectangular GDT configuration.

It has been found that, when the gas **M** includes helium gas in a significant proportion, the arc voltage between adjacent electrodes is significantly increased as compared to when other commonly used gases are used, while maintaining substantially the same or a similar overall protection level voltage for the GDT device. As a result, the GDT can be constructed with fewer inner electrodes and cells, which permits the GDT to be formed with a smaller size and fewer parts in the GDT. As described above, in some embodiments, the gas **M** includes helium in an amount at least 50% by volume of the total volume of gas present in the GDT chamber (*e.g*., the chamber **104, 204, 304, 404, 504,** or the chamber of the GDT 600). As discussed above, in some embodiments, a GDT containing a gas **M** including helium as described is electrically connected between a line or phase voltage of a single or multi-phase power system or circuit and a neutral line of the single or multi-phase power system or circuit.

Moreover, a gas medium including helium gas may be used in each one of a group or set of serially electrically connected single-cell GDTs *(e.g.,* of otherwise known design) that are arranged to provide an overvoltage protection circuit. In this case, each single-cell GDT may include its own respective housing defining its own individual sealed GDT chamber, and the helium-containing gas mediums are present in each GDT chamber between the electrodes of the respective GDT (*i.e.,* the gas is not shared between fluidly communicating cells as in the multi-cell GDTs described herein). The overvoltage protection circuit may include an external trigger device operative to serially trigger the cells of the linked single-cell GDTs. In some embodiments, an overvoltage protection circuit including helium-containing gases as described is electrically connected between a line or phase voltage of a single or multi-phase power system or circuit and a neutral line of the single or multi-phase power system or circuit.

According to some embodiments, the terminal interface layers (*e.g*., layers **160, 260**, **360**, **460**, **560, 560', 560", 660A, 660B**) and the connecting layers (*e.g.,* layer **162**) are initially provided as metal compound including a metal powder in a liquid phase carrier. The compound is applied to the substrate (*e.g*., substrate **152**) and then dries and becomes solid to form the respective terminal interface layer or connecting layer bonded to the substrate and resistor layer. According to some embodiments, the liquid phase carrier is liquid sodium silicate in liquid phase.

While the GDTs **100-600** have been shown and described herein having certain numbers of inner electrodes (*e.g.,* electrodes **E1-E14),** GDTs according to embodiments of the invention may have more or fewer inner electrodes. According to some embodiments, a GDT as disclosed herein has at least two inner electrodes defining at least three spark gaps G and, in some embodiments, or at least three inner electrodes defining at least four spark gaps G.

According to further embodiments, the terminal electrodes and the inner electrodes may have different shapes than those shown in the figures. In some embodiments, the inner electrodes **E1**, **E14, 2E1, 2E19** nearest the terminal electrodes **132, 134, 232, 234** are annular or cylindrical. This configuration can enlarge the active area of the inner electrodes to conduct current from the terminal electrodes.

Many alterations and modifications may be made by those having ordinary skill in the art, given the benefit of present disclosure, without departing from the scope of the invention. Therefore, it must be understood that the illustrated embodiments have been set forth only for the purposes of example, and that it should not be taken as limiting the invention as defined by the following claims.

## Claims

1. A gas discharge tube (400) comprising:
a housing (410) defining a chamber (404);
first and second terminal electrodes (432, 434) mounted on the housing;
a plurality of inner electrodes (4E1-4E18) located in the chamber; and
a gas (M) contained in the chamber;
wherein the inner electrodes are serially disposed in the chamber in spaced apart relation to define a series of spark gaps (G) from the first terminal electrode to the second terminal electrode;
wherein the chamber is hermetically sealed;
wherein the gas discharge tube further comprises a trigger device (450) that is electrically conductively coupled to either one of the first terminal electrode or the second terminal electrode and to ones of the plurality of inner electrodes;
wherein the trigger device includes a plurality of resistor links (4R1-4R18) and wherein the resistor links are configured to conduct current from the inner electrodes;
**characterized in that**:
the trigger device (450) is contained in the hermetically sealed chamber (404) with the inner electrodes (4E1-4E18) and in fluid communication with the gas (M);
the trigger device (450) includes a substrate (452) formed of an electrically insulating material; and
the resistor links (4R1-4R18) are mounted on the substrate.

2. The gas discharge tube of Claim 1 wherein the plurality of inner electrodes includes at least three electrodes defining at least four spark gaps.

3. The gas discharge tube of Claim 1 wherein the housing includes an insulator (410) and a cover forming the housing and defining the chamber, and the insulator is formed of an electrically insulating material.

4. The gas discharge tube of Claim 1 wherein the inner electrodes are captured in the chamber such that limited displacement is permitted between the housing and the inner electrodes.

5. The gas discharge tube of Claim 4 wherein:
each of the resistor links includes a resistor layer bonded to the substrate, the resistor layer being formed of an electrically resistive material;
each of the resistor links further includes a terminal interface layer (160) between the resistor layer thereof and the inner electrode associated with the resistor link; and
the terminal interface layer is formed of metal.

6. The gas discharge tube of Claim 1 wherein the trigger device (450) includes holes (459) defined in the substrate to permit electrical connection between the resistor links (4R1-4R18) and the inner electrodes (4E1-4E18).

7. The gas discharge tube of Claim 1 wherein each of the resistor links includes a resistor layer (164) bonded to the substrate (152), the resistor layer being formed of an electrically resistive material.

8. The gas discharge tube of Claim 7 wherein the electrically resistive material includes graphite in an adhesive carrier.

9. The gas discharge tube of Claim 7 wherein:
each of the resistor links further includes a terminal interface layer (160) between the resistor layer thereof and the inner electrode associated with the resistor link; and
the terminal interface layer is formed of metal.

10. The gas discharge tube of Claim 1 wherein the trigger device (650) includes:
first and second substrates (672, 673) each formed of an electrically insulating material;
at least one resistor link (6R10-6R12) mounted on the first substrate; and
at least one resistor link (6R4-6R6) mounted on the second substrate;
wherein the resistor links are configured to conduct current from the inner electrodes.

11. The gas discharge tube of Claim 10 wherein the second substrate (673) is stacked on the first substrate (672).

12. The gas discharge tube of Claim 1 wherein the housing (410) includes integral locator features (453A) that limit displacement of the inner electrodes relative to the housing.

13. The gas discharge tube of Claim 1 wherein:
the housing includes a partition wall (215) that divides the chamber (220) into fluidly connected first and second subchambers (220A, 220B);
the first terminal electrode (232) is disposed in the first subchamber;
the second terminal electrode (234) is disposed in the second subchamber; and
some of the inner electrodes (2E1-2E9) are disposed in the first subchamber and some of the inner electrodes (2E11-2E19) are disposed in the second subchamber.

14. The gas discharge tube of Claim 1, wherein the gas (M) contained in the chamber comprises helium.

## Patentansprüche

1. Gasentladungsröhre (400), umfassend:
ein Gehäuse (410), das eine Kammer (404) definiert;
eine erste und zweite Elektrode (432, 434), die auf dem Gehäuse angebracht sind;
eine Vielzahl von inneren Elektroden (4E1-4E18), die sich in der Kammer befinden; und
ein Gas (M), das in der Kammer enthalten ist;
wobei die inneren Elektroden in der Kammer in einer beabstandeten Beziehung seriell angeordnet sind, um eine Serie von Funkenspalten (G) von der ersten Anschlusselektrode zur zweiten Anschlusselektrode zu definieren;
wobei die Kammer hermetisch abgedichtet ist;
wobei die Gasentladungsröhre ferner eine Auslösevorrichtung (450) umfasst, die entweder mit einer der ersten Anschlusselektrode oder der zweiten Anschlusselektrode und mit jeweiligen der Vielzahl von inneren Elektroden elektrisch leitend gekoppelt ist;
wobei die Auslösevorrichtung eine Vielzahl von Widerstandsstrecken (4R1-4R18) beinhaltet und wobei die Widerstandsstrecken konfiguriert sind, um Strom von den inneren Elektroden zu leiten;
**dadurch gekennzeichnet, dass**
die Auslösevorrichtung (450) in der hermetisch abgedichteten Kammer (404) mit den inneren Elektroden (4E1-4E18) und in Fluidkommunikation mit dem Gas (M) enthalten ist;
die Auslösevorrichtung (450) ein Substrat (452) beinhaltet, das aus einem elektrisch isolierenden Material gebildet ist; und
die Widerstandsstrecken (4R1-4R18) auf dem Substrat angebracht sind.

2. Gasentladungsröhre nach Anspruch 1, wobei die Vielzahl von inneren Elektroden mindestens drei Elektroden beinhaltet, die mindestens vier Funkenspalten definieren.

3. Gasentladungsröhre nach Anspruch 1, wobei das Gehäuse einen Isolator (410) und eine Abdeckung beinhaltet, die das Gehäuse bilden und die Kammer definieren und der Isolator aus einem elektrisch leitenden Material gebildet ist.

4. Gasentladungsröhre nach Anspruch 1, wobei die inneren Elektroden in der Kammer so erfasst sind, dass eine begrenzte Verschiebung zwischen dem Gehäuse und den inneren Elektroden gestattet ist.

5. Gasentladungsröhre nach Anspruch 4, wobei:
jede der Widerstandsstrecken eine Widerstandsschicht beinhaltet, die an das Substrat gebunden ist, wobei die Widerstandsschicht aus einem elektrisch widerstandsfähigen Material gebildet ist;
jede der Widerstandsstrecken ferner eine Anschlussschnittstellenschicht (160) zwischen der Widerstandsschicht davon und der mit der Widerstandsstrecke assoziierten inneren Elektrode beinhaltet; und
die Anschlussschnittstellenschicht aus Metall gebildet ist.

6. Gasentladungsröhre nach Anspruch 1, wobei die Auslösevorrichtung (450) Löcher (459) beinhaltet, die in dem Substrat definiert sind, um eine elektrische Verbindung zwischen den Widerstandsstrecken (4R1-4R18) und den inneren Elektroden (4E1-4E18) zu gestatten.

7. Gasentladungsröhre nach Anspruch 1, wobei jede der Widerstandsstrecken eine Widerstandsschicht (164) beinhaltet, die an das Substrat (152) gebunden ist, wobei die Widerstandsschicht aus einem elektrisch widerstandsfähigen Material gebildet ist.

8. Gasentladungsröhre nach Anspruch 7, wobei das elektrisch widerstandsfähige Material Graphit in einem Klebstoffträger beinhaltet.

9. Gasentladungsröhre nach Anspruch 7, wobei:
jede der Widerstandsstrecken ferner eine Anschlussschnittstellenschicht (160) zwischen der Widerstandsschicht davon und der mit der Widerstandsstrecke assoziierten inneren Elektrode beinhaltet; und
die Anschlussschnittstellenschicht aus Metall gebildet ist.

10. Gasentladungsröhre nach Anspruch 1, wobei die Auslösevorrichtung (650) Folgendes beinhaltet:
ein erstes und zweites Substrat (672, 673), die jeweils aus einem elektrisch isolierenden Material gebildet sind;
mindestens eine Widerstandsstrecke (6R10-6R12), die auf dem ersten Substrat angebracht ist; und
mindestens eine Widerstandsstrecke (6R4-6R6), die auf dem zweiten Substrat angebracht ist;
wobei die Widerstandsstrecken konfiguriert sind, um Strom von den inneren Elektroden zu leiten.

11. Gasentladungsröhre nach Anspruch 10, wobei das zweite Substrat (673) auf das erste Substrat (672) gestapelt ist.

12. Gasentladungsröhre nach Anspruch 1, wobei das Gehäuse (410) integrale Fixierungsmerkmale (453A) beinhaltet, die eine Verschiebung der inneren Elektroden relativ zum Gehäuse begrenzen.

13. Gasentladungsröhre nach Anspruch 1, wobei:
das Gehäuse eine Partitionswand (215) beinhaltet, die die Kammer (220) in eine fluidisch verbundene erste und zweite Teilkammer (220A, 220B) unterteilt;
die erste Anschlusselektrode (232) in der ersten Teilkammer angeordnet ist;
die zweite Anschlusselektrode (234) in der zweiten Teilkammer angeordnet ist; und
einige der inneren Elektroden (2E1-2E9) in der ersten Teilkammer angeordnet sind und einige der inneren Elektroden (2E11-2E19) in der zweiten Teilkammer angeordnet sind.

14. Gasentladungsröhre nach Anspruch 1, wobei das Gas (M), das in der Kammer enthalten ist, Helium umfasst.

## Revendications

1. Tube à décharge gazeuse (400) comprenant :
un logement (410) définissant une chambre (404) ;
des première et deuxième électrodes terminales (432, 434) montées sur le logement ;
une pluralité d'électrodes internes (4E1-4E18) situées dans la chambre ; et
un gaz (M) contenu dans la chambre ;
dans lequel les électrodes internes sont disposées en série dans la chambre dans une relation d'écartement afin de définir une série d'éclateurs (G) depuis la première électrode terminale jusqu'à la deuxième électrode terminale ;
dans lequel la chambre est hermétiquement scellée ;
dans lequel le tube à décharge gazeuse comprend en outre un dispositif déclencheur (450) qui est couplé de manière électriquement conductrice à l'une ou à l'autre parmi la première électrode terminale ou la deuxième électrode terminale et à des électrodes parmi la pluralité d'électrodes internes ;
dans lequel le dispositif déclencheur inclut une pluralité de liaisons de résistance (4R1-4R18) et dans lequel les liaisons de résistance sont configurées pour conduire le courant à partir des électrodes internes ;
**caractérisé en ce que** :
le dispositif déclencheur (450) est contenu dans la chambre hermétiquement scellée (404) avec les électrodes internes (4E1-4E18) et en communication fluidique avec le gaz (M) ;
le dispositif déclencheur (450) inclut un substrat (452) formé en un matériau électriquement isolant ; et
les liaisons de résistance (4R1-4R18) sont montées sur le substrat.

2. Tube à décharge gazeuse de la revendication 1 dans lequel la pluralité d'électrodes internes inclut au moins trois électrodes définissant au moins quatre éclateurs.

3. Tube à décharge gazeuse de la revendication 1 dans lequel le logement inclut un isolateur (410) et un capot formant le logement et définissant la chambre, et l'isolateur est formé en un matériau électriquement isolant.

4. Tube à décharge gazeuse de la revendication 1 dans lequel les électrodes internes sont capturées dans la chambre de telle sorte qu'un déplacement limité soit permis entre le logement et les électrodes internes.

5. Tube à décharge gazeuse de la revendication 4 dans lequel :
chacune des liaisons de résistance inclut une couche de résistance liaisonnée au substrat, la couche de résistance étant formée en un matériau électriquement résistif ;
chacune des liaisons de résistance inclut en outre une couche d'interface terminale (160) entre la couche de résistance de celle-ci et l'électrode interne associée à la liaison de résistance ; et
la couche d'interface terminale est formée en métal.

6. Tube à décharge gazeuse de la revendication 1 dans lequel le dispositif déclencheur (450) inclut des trous (459) définis dans le substrat pour permettre une connexion électrique entre les liaisons de résistance (4R1-4R18) et les électrodes internes (4E1-4E18).

7. Tube à décharge gazeuse de la revendication 1 dans lequel chacune des liaisons de résistance inclut une couche de résistance (164) liaisonnée au substrat (152), la couche de résistance étant formée en un matériau électriquement résistif.

8. Tube à décharge gazeuse de la revendication 7 dans lequel le matériau électriquement résistif inclut du graphite dans un support adhésif.

9. Tube à décharge gazeuse de la revendication 7 dans lequel :
chacune des liaisons de résistance inclut en outre une couche d'interface terminale (160) entre la couche de résistance de celle-ci et l'électrode interne associée à la liaison de résistance ; et
la couche d'interface terminale est formée en métal.

10. Tube à décharge gazeuse de la revendication 1 dans lequel le dispositif déclencheur (650) inclut :
des premier et deuxième substrats (672, 673) chacun étant formé en un matériau électriquement isolant ;
au moins une liaison de résistance (6R10-6R12) montée sur le premier substrat ; et
au moins une liaison de résistance (6R4-6R6) montée sur le deuxième substrat ;
dans lequel les liaisons de résistance sont configurées pour conduire le courant à partir des électrodes internes.

11. Tube à décharge gazeuse de la revendication 10 dans lequel le deuxième substrat (673) est empilé sur le premier substrat (672).

12. Tube à décharge gazeuse de la revendication 1 dans lequel le logement (410) inclut des caractéristiques de localisation d'un seul tenant (453A) qui limitent le déplacement des électrodes internes relativement au logement.

13. Tube à décharge gazeuse de la revendication 1 dans lequel :
le logement inclut une paroi de séparation (215) qui divise la chambre (220) en des première et deuxième sous-chambres raccordées fluidiquement (220A, 220B) ;
la première électrode terminale (232) est disposée dans la première sous-chambre ;
la deuxième électrode terminale (234) est disposée dans la deuxième sous-chambre ; et
quelques-unes des électrodes internes (2E1-2E9) sont disposées dans la première sous-chambre et quelques-unes des électrodes internes (2E11-2E19) sont disposées dans la deuxième sous-chambre.

14. Tube à décharge gazeuse de la revendication 1, dans lequel le gaz (M) contenu dans la chambre comprend de l'hélium.
